# EUROPEAN PATENT APPLICATION

(11) **EP 4 436 306 A1**
(43) Date of publication of application: **25.09.2024**
(21) Application number: 21964343.4
(22) Date of filing: 17.11.2021
(51) Int. Cl.: H04W 76/19, H04W 76/27, H04W 12/04

(54) **CONNECTION RECOVERY METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: WU, Yumin, Beijing 100085 (CN); SHI, Rao, Beijing 100085 (CN)
(74) Representative: Kudlek, Franz Thomas
(86) International application number: PCT/CN2021/131235
(87) International publication number: WO 2023/087180

(57) **Abstract**

The embodiments of the present disclosure relate to a connection recovery method and apparatus, and a communication device and a storage medium. The method comprises: a terminal determining, on the basis of a connection recovery mode selection indication, whether to use a first security mode to send the current connection recovery request, and when the first security mode is used to send the current connection recovery request, at least some parameters of the current connection recovery request being different from parameters of a historical connection recovery request. In this way, whether to use a first security mode to send the current connection recovery request is determined by means of a connection recovery mode selection indication.

## Description

### TECHNICAL FIELD

The present disclosure relates to, but is not limited to, the technical field of wireless communication, and in particular, to a connection resume method and apparatus, a communication device, and a storage medium.

### BACKGROUND

In a 5th generation (5G) cellular mobile communication system, a network side and a terminal may retain some configuration information of the terminal, so that the terminal is in an inactive state when there is no data transmission. When there is data transmission, the terminal may initiate a connection resume process through a connection resume request, so as to resume a connection according to the previously retained configuration information. The terminal has same energy saving effect in the inactive state and in an idle state.

### SUMMARY

In view of this, embodiments of the present disclosure provide a connection resume method and apparatus, a communication device, and a storage medium.

According to a first aspect of embodiments of the present disclosure, a connection resume method is provided, performed by a terminal, including:
determining, based on a connection-resume-manner-selection indication, whether to adopt a first secure manner to send a current connection resume request;
where when the first secure manner is adopted to send the current connection resume request, at least part of parameters of the current connection resume request are different from parameters of a historical connection resume request.

In an embodiment, when a second secure manner is adopted to send the current connection resume request, the parameters of the current connection resume request are same as the parameters of the historical connection resume request.

In an embodiment, a determining manner of a terminal authentication identifier in the first secure manner is different from a determining manner of the terminal authentication identifier in the second secure manner;
and/or,
a determining manner of a terminal number in the first secure manner is different from a determining manner of the terminal number in the second secure manner;
   and/or,
a determining manner of a context in the first secure manner is different from a determining manner of the context in the second secure manner;
   and/or,
a determining manner of a security key in the first secure manner is different from a determining manner of the security key in the second secure manner.

In an embodiment, when the first secure manner is adopted to send the current connection resume request, a first input parameter used to determine a terminal authentication identifier of the current connection resume request is different from a second input parameter used to determine the terminal authentication identifier of the historical connection resume request.

In an embodiment, the method further includes:
receiving first indication information, where the first indication information indicates at least one of the first output parameter or the second input parameter.

In an embodiment, the method further includes:
performing secure authentication on the first indication information;
in response to that the secure authentication fails, ignoring the first indication information; and
in response to that the secure authentication succeeds, adopting at least one of the first output parameter or the second input parameter indicated by the first indication information.

In an embodiment, when the first secure manner is adopted to send the current connection resume request, a terminal number corresponding to the current connection resume request is different from a terminal number corresponding to the historical connection resume request.

In an embodiment, the terminal number corresponding to the current connection resume request equals to a sum of the terminal number corresponding to the historical connection resume request and N, where N is a positive integer.

In an embodiment, in response to receiving feedback information for the historical connection resume request, the terminal number corresponding to the current connection resume request equals to the sum of the terminal number corresponding to the historical connection resume request and N; and

in response to not receiving the feedback information for the historical connection resume request, the terminal number corresponding to the current connection resume request is a preset initial value.

In an embodiment, the terminal number includes: a number COUNT of a packet data convergence protocol (PDCP).

In an embodiment, when the first secure manner is adopted to send the current connection resume request, a context corresponding to the current connection resume request is determined based on a context corresponding to the historical connection resume request, and the context corresponding to the historical connection resume request is different from the context corresponding to the current connection resume request.

In an embodiment, a terminal security key in the context corresponding to the current connection resume request is determined based on at least one of a terminal security key in the context corresponding to the historical connection resume request, a next hop (NH), or a next hop chaining count (NCC).

In an embodiment, when the first secure manner is adopted to send the current connection resume request, a terminal security key is determined by the terminal.

In an embodiment, the method further includes:
sending second indication information indicating the terminal security key.

In an embodiment, when the first secure manner is adopted to send the current connection resume request, at least a terminal authentication identifier of the current connection resume request is different from a terminal authentication identifier of the historical connection resume request.

In an embodiment, the terminal authentication identifier includes: all or part of a message authentication code for integrity (MAC-I).

In an embodiment, the method includes one of:
receiving third indication information indicating the connection-resume-manner-selection indication; or
determining the connection-resume-manner-selection indication based on a communication protocol.

In an embodiment, receiving third indication information indicating the connection-resume-manner-selection indication includes one of:
receiving a radio resource control (RRC) message carrying the third indication information;
receiving a broadcast message carrying the third indication information.

According to a second aspect of embodiments of the present disclosure, a connection resume method is provided, performed by a base station, including:
determining, based on a connection-resume-manner-selection indication, whether a terminal adopts a first secure manner to send a current connection resume request;
where when the terminal adopts the first secure manner to send the current connection resume request, at least part of parameters of the current connection resume request are different from parameters of a historical connection resume request.

In an embodiment, when the terminal adopts a second secure manner to send the current connection resume request, the parameters of the current connection resume request are same as the parameters of the historical connection resume request.

In an embodiment, a determining manner of a terminal authentication identifier in the first secure manner is different from a determining manner of the terminal authentication identifier in the second secure manner;
and/or,
a determining manner of a terminal number in the first secure manner is different from a determining manner of the terminal number in the second secure manner;
   and/or,
a determining manner of a context in the first secure manner is different from a determining manner of the context in the second secure manner;
   and/or,
a determining manner of a security key in the first secure manner is different from a determining manner of the security key in the second secure manner.

In an embodiment, when the terminal adopts the first secure manner to send the current connection resume request, a first input parameter used to determine a terminal authentication identifier of the current connection resume request is different from a second input parameter used to determine the terminal authentication identifier of the historical connection resume request.

In an embodiment, the method further includes:
sending first indication information, where the first indication information indicates at least one of the first output parameter or the second input parameter.

In an embodiment, when the terminal adopts the first secure manner to send the current connection resume request, a terminal number corresponding to the current connection resume request is different from a terminal number corresponding to the historical connection resume request.

In an embodiment, the terminal number corresponding to the current connection resume request equals to a sum of the terminal number corresponding to the historical connection resume request and N, where N is a positive integer.

In an embodiment, in response to receiving feedback information for the historical connection resume request, the terminal number corresponding to the current connection resume request equals to the sum of the terminal number corresponding to the historical connection resume request and N; and

in response to not receiving the feedback information for the historical connection resume request, the terminal number corresponding to the current connection resume request is a preset initial value.

In an embodiment, the terminal number includes: a number COUNT of a packet data convergence protocol (PDCP).

In an embodiment, when the terminal adopts the first secure manner to send the current connection resume request, a context corresponding to the current connection resume request is determined based on a context corresponding to the historical connection resume request, and the context corresponding to the historical connection resume request is different from the context corresponding to the current connection resume request.

In an embodiment, a terminal security key in the context corresponding to the current connection resume request is determined based on at least one of a terminal security key in the context corresponding to the historical connection resume request, a next hop (NH), or a next hop chaining count (NCC).

In an embodiment, when the terminal adopts the first secure manner to send the current connection resume request, a terminal security key is determined by the terminal.

In an embodiment, the method further includes:
receiving second indication information indicating the terminal security key.

In an embodiment, when the terminal adopts the first secure manner to send the current connection resume request, at least a terminal authentication identifier of the current connection resume request is different from a terminal authentication identifier of the historical connection resume request.

In an embodiment, the terminal authentication identifier includes: all or part of a message authentication code for integrity (MAC-I).

In an embodiment, the method includes one of:
sending third indication information indicating the connection-resume-manner-selection indication; or
determining the connection-resume-manner-selection indication based on a communication protocol.

In an embodiment, sending third indication information indicating the connection-resume-manner-selection indication includes one of:
sending a radio resource control (RRC) message carrying the third indication information;
sending a broadcast message carrying the third indication information.

In an embodiment, the method includes: in response to that the base station is an anchor base station of the terminal, sending indication information indicating whether the terminal adopts the first secure manner to send the current connection resume request to a non-anchor base station of the terminal.

According to a third aspect of embodiments of the present disclosure, a connection resume apparatus is provided, applied to a terminal, including:
a first determining module, configured to determine, based on a connection-resume-manner-selection indication, whether to adopt a first secure manner to send a current connection resume request;
where when the first secure manner is adopted to send the current connection resume request, at least part of parameters of the current connection resume request are different from parameters of a historical connection resume request.

In an embodiment, when a second secure manner is adopted to send the current connection resume request, the parameters of the current connection resume request are same as the parameters of the historical connection resume request.

In an embodiment, a determining manner of a terminal authentication identifier in the first secure manner is different from a determining manner of the terminal authentication identifier in the second secure manner;
and/or,
a determining manner of a terminal number in the first secure manner is different from a determining manner of the terminal number in the second secure manner;
   and/or,
a determining manner of a context in the first secure manner is different from a determining manner of the context in the second secure manner;
   and/or,
a determining manner of a security key in the first secure manner is different from a determining manner of the security key in the second secure manner.

In an embodiment, when the first secure manner is adopted to send the current connection resume request, a first input parameter used to determine a terminal authentication identifier of the current connection resume request is different from a second input parameter used to determine the terminal authentication identifier of the historical connection resume request.

In an embodiment, the apparatus further includes:
a first receiving module, configured to receive first indication information, where the first indication information indicates at least one of the first output parameter or the second input parameter.

In an embodiment, the apparatus further includes:
an authenticating module, configured to perform secure authentication on the first indication information;
in response to that the secure authentication fails, ignoring the first indication information; and
in response to that the secure authentication succeeds, adopting at least one of the first output parameter or the second input parameter indicated by the first indication information.

In an embodiment, when the first secure manner is adopted to send the current connection resume request, a terminal number corresponding to the current connection resume request is different from a terminal number corresponding to the historical connection resume request.

In an embodiment, the terminal number corresponding to the current connection resume request equals to a sum of the terminal number corresponding to the historical connection resume request and N, where N is a positive integer.

In an embodiment, in response to receiving feedback information for the historical connection resume request, the terminal number corresponding to the current connection resume request equals to the sum of the terminal number corresponding to the historical connection resume request and N; and
in response to not receiving the feedback information for the historical connection resume request, the terminal number corresponding to the current connection resume request is a preset initial value.

In an embodiment, the terminal number includes: a number COUNT of a packet data convergence protocol (PDCP).

In an embodiment, when the first secure manner is adopted to send the current connection resume request, a context corresponding to the current connection resume request is determined based on a context corresponding to the historical connection resume request, and the context corresponding to the historical connection resume request is different from the context corresponding to the current connection resume request.

In an embodiment, a terminal security key in the context corresponding to the current connection resume request is determined based on at least one of a terminal security key in the context corresponding to the historical connection resume request, a next hop (NH), or a next hop chaining count (NCC).

In an embodiment, when the first secure manner is adopted to send the current connection resume request, a terminal security key is determined by the terminal.

In an embodiment, the apparatus further includes:
a first sending module, configured to send second indication information indicating the terminal security key.

In an embodiment, when the first secure manner is adopted to send the current connection resume request, at least a terminal authentication identifier of the current connection resume request is different from a terminal authentication identifier of the historical connection resume request.

In an embodiment, the terminal authentication identifier includes: all or part of a message authentication code for integrity (MAC-I).

In an embodiment, the apparatus includes one of:
a second receiving module, configured to receive third indication information indicating the connection-resume-manner-selection indication; or
a second determining module, configured to determine the connection-resume-manner-selection indication based on a communication protocol.

In an embodiment, the second receiving module is specifically configured to perform one of:
receiving a radio resource control (RRC) message carrying the third indication information;
receiving a broadcast message carrying the third indication information.

According to a fourth aspect of embodiments of the present disclosure, a connection resume apparatus is provided, applied to a base station, including:
a third determining module, configured to determine, based on a connection-resume-manner-selection indication, whether a terminal adopts a first secure manner to send a current connection resume request;
where when the terminal adopts the first secure manner to send the current connection resume request, at least part of parameters of the current connection resume request are different from parameters of a historical connection resume request.

In an embodiment, when the terminal adopts a second secure manner to send the current connection resume request, the parameters of the current connection resume request are same as the parameters of the historical connection resume request.

In an embodiment, a determining manner of a terminal authentication identifier in the first secure manner is different from a determining manner of the terminal authentication identifier in the second secure manner;
and/or,
a determining manner of a terminal number in the first secure manner is different from a determining manner of the terminal number in the second secure manner;
   and/or,
a determining manner of a context in the first secure manner is different from a determining manner of the context in the second secure manner;
   and/or,
a determining manner of a security key in the first secure manner is different from a determining manner of the security key in the second secure manner.

In an embodiment, when the terminal adopts the first secure manner to send the current connection resume request, a first input parameter used to determine a terminal authentication identifier of the current connection resume request is different from a second input parameter used to determine the terminal authentication identifier of the historical connection resume request.

In an embodiment, the apparatus further includes:
a second sending module, configured to send first indication information, where the first indication information indicates at least one of the first output parameter or the second input parameter.

In an embodiment, when the terminal adopts the first secure manner to send the current connection resume request, a terminal number corresponding to the current connection resume request is different from a terminal number corresponding to the historical connection resume request.

In an embodiment, the terminal number corresponding to the current connection resume request equals to a sum of the terminal number corresponding to the historical connection resume request and N, where N is a positive integer.

In an embodiment, in response to receiving feedback information for the historical connection resume request, the terminal number corresponding to the current connection resume request equals to the sum of the terminal number corresponding to the historical connection resume request and N; and
in response to not receiving the feedback information for the historical connection resume request, the terminal number corresponding to the current connection resume request is a preset initial value.

In an embodiment, the terminal number includes: a number COUNT of a packet data convergence protocol (PDCP).

In an embodiment, when the terminal adopts the first secure manner to send the current connection resume request, a context corresponding to the current connection resume request is determined based on a context corresponding to the historical connection resume request, and the context corresponding to the historical connection resume request is different from the context corresponding to the current connection resume request.

In an embodiment, a terminal security key in the context corresponding to the current connection resume request is determined based on at least one of a terminal security key in the context corresponding to the historical connection resume request, a next hop (NH), or a next hop chaining count (NCC).

In an embodiment, when the terminal adopts the first secure manner to send the current connection resume request, a terminal security key is determined by the terminal.

In an embodiment, the apparatus further includes:
a third receiving module, configured to receive second indication information indicating the terminal security key.

In an embodiment, when the terminal adopts the first secure manner to send the current connection resume request, at least a terminal authentication identifier of the current connection resume request is different from a terminal authentication identifier of the historical connection resume request.

In an embodiment, the terminal authentication identifier includes: all or part of a message authentication code for integrity (MAC-I).

In an embodiment, the apparatus includes one of:
a third sending module, configured to send third indication information indicating the connection-resume-manner-selection indication; or
a fourth determining module, configured to determine the connection-resume-manner-selection indication based on a communication protocol.

In an embodiment, the third sending module is specifically configured to perform one of:
sending a radio resource control (RRC) message carrying the third indication information;
sending a broadcast message carrying the third indication information.

In an embodiment, the apparatus includes:
a fourth sending module, configured to: in response to that the base station is an anchor base station of the terminal, send indication information indicating whether the terminal adopts the first secure manner to send the current connection resume request to a non-anchor base station of the terminal.

According to a fifth aspect of embodiments of the present disclosure, a communication device apparatus is provided, including a processor, a memory, and an executable program stored in the memory and executable by the processor, where when the processor executes the executable program, steps of the connection resume method according to the first aspect or the second aspect are implemented.

According to a sixth aspect of embodiments of the present disclosure, a storage medium is provided, where the storage medium stores an executable program, and when the executable program is executed by a processor, steps of the connection resume method according to the first aspect or the second aspect are implemented.

According to a fifth aspect of embodiments of the present disclosure, a communication device apparatus is provided, including a processor, a memory, and an executable program stored in the memory and executable by the processor, where when the processor executes the executable program, steps of the connection resume method according to the first aspect or the second aspect are implemented.

According to a sixth aspect of embodiments of the present disclosure, a storage medium is provided, where the storage medium stores an executable program, and when the executable program is executed by a processor, steps of the connection resume method according to the first aspect or the second aspect are implemented.

According to a connection resume method and apparatus, a communication device and a storage medium provided by embodiments of the present disclosure, a terminal determines whether to adopt a first secure manner to send a current connection resume request based on a connection-resume-manner-selection indication; where when the first secure manner is adopted to send the current connection resume request, at least part of parameters of the current connection resume request are different from parameters of a historical connection resume request. In this way, whether to adopt the first secure manner to send the current connection resume request is determined through the connection-resume-manner-selection indication. On one hand, it can be selected whether to adopt the first secure manner to send the current connection resume request, so as to improve flexibility of selecting a manner of sending a connection resume request. On the other hand, when the first secure manner is adopted to send the current connection resume request, since at least part of parameters of the current connection resume request are different from parameters of a historical connection resume request, cases can be reduced that a third-party communication device communicates with the base station by replicating the historical connection resume request, thereby improving communication security.

It should be understood that the above general description and the following detailed description are exemplary and illustrative only and are not intended to limit the embodiments of the present disclosure.

### BRIEF DESCRIPTION OF DRAWINGS

The drawings herein are incorporated in and constitute a part of this specification, illustrating principles consistent with embodiments of the present disclosure and together with the description for illustrating embodiments of the present disclosure.
FIG. 1 is a schematic structural diagram of a wireless communication system according to an exemplary embodiment.
FIG. 2 is a schematic diagram of connection resume interactions according to an exemplary embodiment.
FIG. 3 is a schematic flowchart of a connection resume method according to an exemplary embodiment.
FIG. 4 is a schematic flowchart of another connection resume method according to an exemplary embodiment.
FIG. 5 is a schematic flowchart of another connection resume method according to an exemplary embodiment.
FIG. 6 is a schematic flowchart of another connection resume method according to an exemplary embodiment.
FIG. 7 is a schematic flowchart of another connection resume method according to an exemplary embodiment.
FIG. 8 is a block diagram of a connection resume apparatus according to an exemplary embodiment.
FIG. 9 is a block diagram of another connection resume apparatus according to an exemplary embodiment.
FIG. 10 is a block diagram of an apparatus for connection resume according to an exemplary embodiment.

### DETAILED DESCRIPTION

Exemplary embodiments will be described in detail herein, examples of which are illustrated in the accompanying drawings. The following description relates to the accompanying drawings, in which same numerals indicate same or similar elements unless otherwise indicated. The embodiments described in the following exemplary embodiments do not represent all embodiments consistent with embodiments of the present disclosure. Rather, they are merely examples of apparatuses and methods consistent with some aspects of embodiments of the present disclosure as detailed in the appended claims.

Terms used in the embodiments of the present disclosure are for the purpose of describing particular embodiments only and are not intended to limit the embodiments of the present disclosure. The singular forms "a," "the" and "said" as used in the embodiments of the present disclosure and the appended claims are also intended to include "plural" forms, unless the context clearly indicates otherwise. It should also be understood that the terms "and/or" as used herein refer to and include any or all possible combinations of one or more associated listed items.

It should be understood that although terms "first", "second", "third", etc., may be used in the embodiments of the present disclosure to describe various information, the information should not be limited to these terms. These terms are used only to distinguish a same type of information from one another. For example, first information may also be referred to as second information, similarly, second information may also be referred to as first information, without departing from the scope of the embodiments of the present disclosure. The term "if' as used herein may be interpreted as "when" or "upon" or "in response to determining" depending on the context.

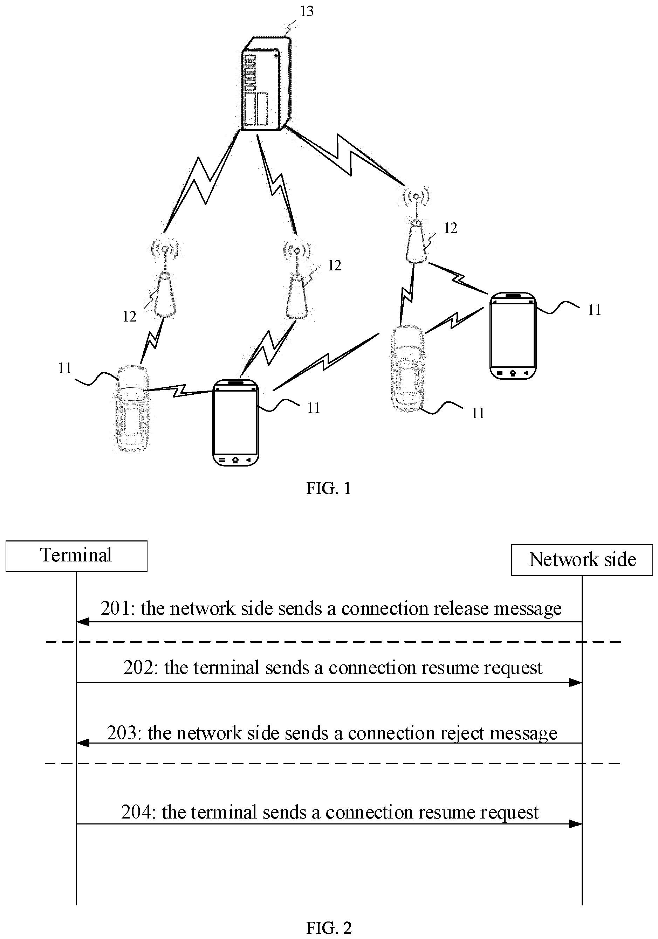

FIG. 1 is a schematic structural diagram of a wireless communication system according to an embodiment of the present disclosure. As shown in FIG. 1, the wireless communication system is a communication system based on a cellular mobile communication technology, and the wireless communication system may include: a plurality of terminals 11 and a plurality of base stations 12.

The terminal 11 may be a device that provides voice and/or data connectivity to a user. The terminal 11 may communicate with one or more core networks via a radio access network (RAN), and the terminal 11 may be an Internet of Things terminal, such as a sensor device, a mobile phone (or referred to as a "cellular" phone), and a computer having an Internet of Things terminal, for example, may be a fixed, portable, pocket-sized, handheld, computer built-in or vehicle-mounted device. For example, a station (Station, STA), a subscriber unit, a subscriber station, a mobile station, a mobile, a remote station, an access point, a remote terminal, an access terminal, a user terminal, a user agent, a user device, or a user equipment (UE). Alternatively, the terminal 11 may alternatively be a device of an unmanned aerial vehicle. Alternatively, the terminal 11 may also be a vehicle-mounted device, for example, may be a vehicle computer with a wireless communication function, or a wireless communication device externally connected to a vehicle computer. Alternatively, the terminal 11 may alternatively be a roadside device, for example, may be a street lamp, a signal light, other roadside devices having a wireless communication function, or the like.

The base station 12 may be a network-side device in a wireless communication system. The wireless communication system may be a fourth generation mobile communication (4G) system, also referred to as a Long Term Evolution (LTE) system; or the wireless communication system may also be a 5G system, also referred to as a new radio (NR) system or a 5G NR system. Alternatively, the wireless communication system may also be a next generation system of the 5G system. The access network in the 5G system may be referred to as an NG-RAN (new generation radio access network). Alternatively, the wireless communication system may also be an MTC (Machine Type Communication) system.

The base station 12 may be an evolved NodeB (eNB) used in a 4G system. Alternatively, the base station 12 may also be a base station adopting a centralized distributed architecture (gNB) in a 5G system. When the base station 12 adopts a centralized distributed architecture, it usually includes a central unit (CU) and at least two distributed units (DU). A protocol stack of a Packet Data Convergence Protocol (PDCP) layer, a Radio Link Control (RLC) layer, and a Media Access Control (MAC) layer is disposed in the centralized unit; a physical (PHY) layer protocol stack is disposed in the distribution unit, and a specific implementation of the base station 12 is not limited in the embodiments of the present disclosure.

A wireless connection can be established between the base station 12 and the terminal 11 through a wireless air interface. In different embodiments, the wireless air interface is a wireless air interface based on a fourth generation mobile communication network technology (4G) standard; or the wireless air interface is a wireless air interface based on a fifth generation mobile communication network technology (5G) standard, for example, the wireless air interface is a new air interface; or the wireless air interface may be a wireless air interface based on a next-generation of 5G mobile communication network technology standard.

In some embodiments, an End to End (E2E) connection may also be established between the terminals 11. For example, a scenario such as V2V (vehicle to vehicle) communication, V2I (vehicle to Infrastructure) communication, and V2P (vehicle to pedestrian) communication in Internet of Vehicles communication (vehicle-to-everything, V2X).

In some embodiments, the wireless communication system may further include a network management device 13.

A plurality of base stations 12 are respectively connected to the network management device 13. The network management device 13 may be a core network device in a wireless communication system, for example, the network management device 13 may be a mobility management entity (MME) in an evolved packet core (EPC) network. Alternatively, the network management device may alternatively be another core network device, such as a serving gateway (SGW), a public data network gateway (PGW), a policy and charging rules function (PCRF), a home subscriber server (HSS), or the like. An implementation form of the network management device 13 is not limited in the embodiments of the present disclosure.

An executing subject involved in the embodiments of the present disclosure includes, but is not limited to: a terminal such as a mobile phone in an NTN (Non Terrestrial Network) network, and a base station, etc.

As shown in FIG. 2, specific steps that a terminal enters an active state and initiates a connection resume process through a connection resume request include:
Step 201: a network side (such as a base station) sends a connection release message (RRCRelease) to suspend an RRC (Radio Resource Control) connection of a terminal. In addition to some configuration information of the terminal in a connected state, configuration information used for a connection resume process is further included, and the terminal retains the configuration information in an inactive state, including: a current terminal key (including KgNB and KRRCint); a cell-radio network temporary identifier (C-RNTI) of a source primary cell (source PCell), a cell identifier (such as CellIdentity) and a physical cell identifier (PCI, PhysCellId). The "nextHopChainingCount" configured in the RRCRelease message (i.e., a next hop chaining counter, NCC) specifies a key used by the terminal for a subsequent connection resume process (for example, NCC=0 corresponds to a key 0, and the NCC=1 corresponds to a key 1).

Step 202: when the terminal needs to resume a connection according to requirements (for example, send uplink data). The terminal sends a connection resume request (RRCResumeRequest). The connection resume request may carry a "terminal authentication identifier" (such as resumeMAC-I). The "resumeMAC-I" includes 16 least significant bits (LSB) of a Message Authentication Code for Integrity (MAC-I), that is, last 16 bits sorted by encoded bits. Input parameters of MAC-I computation include:
a physical cell identifier of a primary cell (PCell) of the UE before the RRC connection suspends, a UE identifier C-RNTI (cell-radio network temporary identifier) of the PCell of the UE before the RRC connection suspends, and a cell identifier of a target cell of connection resume;
a KRRCint key in an inactive state context stored by the UE, and an integrity protection algorithm configured in a previous time;
a Packet Data Convergence Protocol Count (PDCP COUNT), a bearer identifier, and a data sending direction (for example, uplink or downlink).

The terminal may derive a KgNB key for the connection resume process according to the NCC or the current KgNB key indicated in step 201.

Then, the terminal derives a KRRCenc key, a KRRCint key, a KUPint key, and a KUPenc key.

Step 203: when the network side cannot receive the connection resume request of the terminal, for example, due to network congestion and other reasons, the network side sends a connection rejection message (namely, an RRCReject). Then, the terminal returns to the inactive state.

Step 204: when the terminal initiates a connection resume process again, the terminal resends a connection resume request according to the process of step 202.

After the terminal receives the connection rejection message, the terminal uses the same terminal identifier (that is, the I-RNTI) and the same KRRCint key when initiating the connection resume process again, that is, a second connection resume request 2 is completely same as a first connection resume request 1. Therefore, a third-party communication device, such as a malicious communication device, may counterfeit the terminal to perform the connection resume process with the base station by capturing the connection resume request 1, which causes that the terminal has a large communication security risk in the connection resume process. For example, the malicious communication device may capture the connection resume request 1, send the captured connection resume request 1 to the base station, and the network side may successfully authenticate the connection resume request 1 and change the context malicious communication device of the terminal. Therefore, when the terminal initiates the connection resume process by using the context configuration retained by the terminal, the connection resume process will fail because the context configuration cannot match.

Therefore, how to reduce a communication security risk of a terminal during a connection resume process when a malicious device counterfeits the terminal to initiate the connection resume process is an urgent problem to be solved.

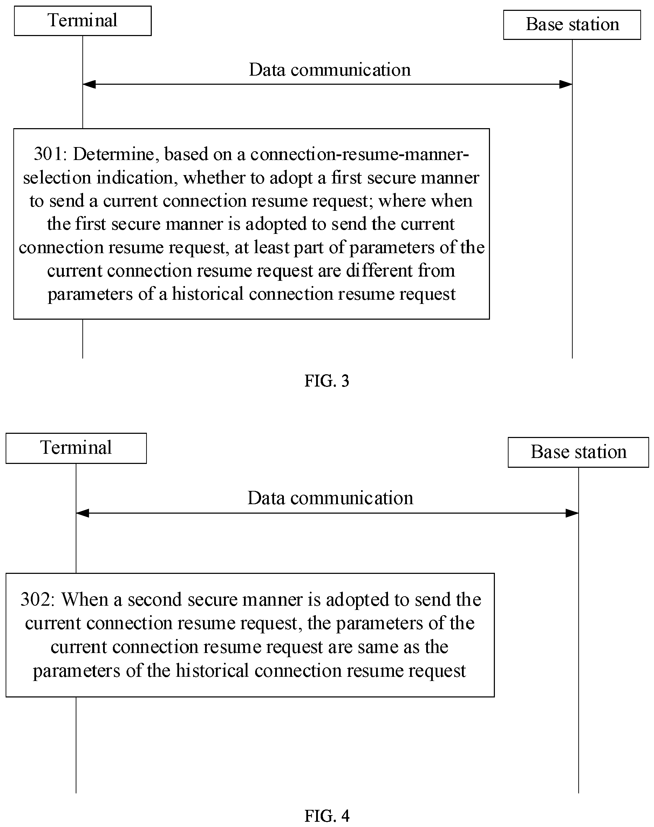

As shown in FIG. 3, an exemplary embodiment provides a connection resume method, and the connection resume method may be performed by a terminal, including:
Step 301: determining, based on a connection-resume-manner-selection indication, whether to adopt a first secure manner to send a current connection resume request;
where when the first secure manner is adopted to send the current connection resume request, at least part of parameters of the current connection resume request are different from parameters of a historical connection resume request.

The terminal may be a communication device such as a mobile phone that performs wireless communication by using a cellular mobile communication network technology.

In related arts, when switching from an inactive state to a connected state, the terminal will send a connection resume request (connection resume request 1) to the base station to request to return to the connected state. When the base station sends a connection rejection message (that is, an RRCReject) to reject the request of the terminal, the terminal may send a connection resume request (connection resume request 2) to request to return to the connection state again, where the connection resume request 1 is completely same as the connection resume request 2. The inactive state may be an RRC inactive state, and the connected state may be an RRC connected state.

The historical connection resume request may include a previous connection resume request sent by the terminal, and the current connection resume request may include but is not limited to a subsequent connection resume request sent by the terminal again after the base station rejects the historical connection resume request. For example, the current connection resume request may also be a subsequent connection resume request sent after the base station receives the historical connection resume request and the terminal enters the inactive state again and needs to perform connection resume.

When the current connection resume request is sent in the first secure manner, the historical connection resume request may be sent in the first secure manner, or may be sent in a second secure manner.

The connection-resume-manner-selection indication is used to indicate whether the UE adopts the first secure manner to send the current connection resume request. When the first secure manner is adopted to send the current connection resume request, at least part of parameters of the current connection resume request are different from parameters of a historical connection resume request. The historical connection resume request may be sent in the first secure manner, or may be sent in a manner different from the first secure manner.

The connection-resume-manner-selection indication may be preconfigured, or may be sent by the network side. The connection-resume-manner-selection indication may indicate whether to adopt the first secure manner based on actual requirement of the terminal. For example, the connection-resume-manner-selection indication may be configured based on a risk that the terminal is counterfeited.

Different part of parameters between the current connection resume request and the historical connection resume request may be used by the base station to identify different connection resume requests. The part of parameters may be determined by both communication parties of the base station and the terminal, and the third-party communication device cannot directly obtain or derive the part of parameters. Therefore, the third-party communication device cannot determine the current connection resume request through the historical connection resume request, and hence cannot counterfeit the terminal to communicate with the base station. Communication security between the terminal and the base station is thereby improved.

For example, the part of parameters may be determined by the base station and the UE by using a same algorithm. The algorithm may be an encryption algorithm agreed upon by the base station and the UE, or the algorithm adopts that the base station and the UE adopt an algorithm parameter that is not known by the third-party communication device.

For another example, at least one of the parameters carried in the current resume connection request cannot be determined based on one or more parameters carried in the previous historical resume connection request. In this way, it can be ensured that leaked parameters of the historical resume connection request being intercepted cannot be used for a connection establishment process of the current (i.e., present) resume connection request, thereby improving the security of the connection.

In this way, whether to adopt the first secure manner to send the current connection resume request is determined through the connection-resume-manner-selection indication. On one hand, it can be selected whether to adopt the first secure manner to send the current connection resume request, so as to improve flexibility of selecting a manner of sending connection resume request. On the other hand, when the first secure manner is adopted to send the current connection resume request, since at least part of parameters of the current connection resume request are different from parameters of a historical connection resume request, cases can be reduced that a third-party communication device communicates with the base station by replicating the historical connection resume request, thereby improving communication security.

In an embodiment, the method includes one of:
receiving third indication information indicating the connection-resume-manner-selection indication; or
determining the connection-resume-manner-selection indication based on a communication protocol.

The connection-resume-manner-selection indication may be determined by the network side. For example, the connection-resume-manner-selection indication may be determined by the base station, and the base station may indicate the connection-resume-manner-selection indication by sending third indication information to the terminal.

The connection-resume-manner-selection indication may also be specified by a communication protocol.

In an embodiment, receiving third indication information indicating the connection-resume-manner-selection indication includes one of:
receiving a radio resource control (RRC) message carrying the third indication information;
receiving a broadcast message carrying the third indication information.

The base station may carry the third indication information by using a dedicated configuration message (for example, an RRC message such as an RRCRelease message) and/or broadcast information, to indicate whether the terminal adopts the first secure manner to send the connection resume request in the connection resume process.

For example, when the third indication information indicates the terminal to adopt the first secure manner to send the connection resume request in the connection resume process, in the connection resume process, the terminal uses the connection resume request sent by adopting the first secure manner to calculate a terminal authentication identifier (for example, resumeMAC-I), otherwise, the terminal calculates the terminal authentication identifier in the second secure manner.

In an embodiment, when the first secure manner is adopted to send the current connection resume request, at least a terminal authentication identifier of the current connection resume request is different from a terminal authentication identifier of the historical connection resume request.

The at least part of parameters may include the terminal authentication identifier, etc. The terminal authentication identifier may be used to identify the terminal. The base station may determine, based on the terminal authentication identifier in the connection resume request, the terminal sending the connection resume request, and then perform the connection resume process.

The terminal authentication identifier may be agreed by the terminal and the base station or may be specified by a protocol, and different terminal authentication identifiers may be adopted in the current connection resume request and the historical connection resume request.

The base station authenticates, by using the terminal authentication identifier in the current connection resume request, whether the current connection resume request is sent by the terminal. When the third-party communication device communicates with the base station by using the replicated historical connection resume request, and the terminal authentication identifier in the historical connection resume request is different from the terminal authentication identifier expected by the base station, the third-party communication device cannot counterfeit the terminal to communicate with the base station.

In this way, when the first secure manner is selected to send the current connection resume request, since the terminal authentication identifier of the current connection resume request is different from the terminal authentication identifier of the historical connection resume request, the third-party communication device cannot pass authentication when communicating with the base station by replicating the historical connection resume request. A condition that the third-party communication device communicates with the base station by replicating the historical connection resume request is reduced, and the communication security is improved.

In an embodiment, the terminal authentication identifier includes: all or part of a message authentication code for integrity (MAC-I).

The MAC-I may be used to authenticate integrity of a signaling message. Different MAC-Is may be used for the current connection resume request and the historical connection resume request. The MAC-I may be determined based on at least one of following parameters: a physical cell identifier of a primary cell (PCell) of the UE before the RRC connection is suspended; a UE identifier C-RNTI of a PCell of the UE before the RRC connection is suspended; a cell identifier of a target cell of the connection resume; a KRRCint key in the inactive state context stored by the UE, and an integrity protection algorithm configured for the previous time; a data convergence protocol layer number (Packet Data Convergence Protocol Count, PDCP COUNT); a bearer identifier, and a data sending direction (for example, uplink or downlink).

The current connection resume request may change one or more parameters, or change an algorithm to obtain a MAC-I different from the historical connection resume request.

A part of the MAC-I may be pre-determined by a communication protocol, or be agreed upon by the base station and the terminal. For example, a part of the MAC-I may be "resumeMAC-I", that is, 16 LSBs of the MAC-I, that is, last 16 bits sorted by encoded bits of the MAC-I.

In this way, when the first secure manner is selected to send the current connection resume request, since all of or part of the MAC-I of the current connection resume request is different from the historical connection resume request, the third-party communication device cannot pass authentication when communicating with the base station by replicating the historical connection resume request. A condition that the third-party communication device communicates with the base station by replicating the historical connection resume request is reduced, and the communication security is improved.

As shown in FIG. 4, an embodiment of the present disclosure provides an information transmission method, further including:

Step 302: when a second secure manner is adopted to send the current connection resume request, the parameters of the current connection resume request are same as the parameters of the historical connection resume request.

Step 302 may be implemented separately or in combination with step 201.

When the first secure manner is not selected to send the current connection resume request, a second secure manner different from the first secure manner may be selected to send the current connection resume request.

The parameters of the current connection resume request sent in the second secure manner are the same as the parameters of the historical connection resume request. When one of the base station and the terminal cannot use the second secure manner, the first secure manner can be used. Therefore, compatibility of connection resume is improved.

In this way, the first secure manner or the second secure manner is determined, through the connection-resume-manner-selection indication, to be adopted to send the current connection resume request. The flexibility of selecting a manner for sending the connection resume request is improved. Different communication requirements are met.

In an embodiment, a determining manner of a terminal authentication identifier in the first secure manner is different from a determining manner of the terminal authentication identifier in the second secure manner;
and/or,
a determining manner of a terminal number in the first secure manner is different from a determining manner of the terminal number in the second secure manner;
   and/or,
a determining manner of a context in the first secure manner is different from a determining manner of the context in the second secure manner;
   and/or,
a determining manner of a terminal security key in the first secure manner is different from a determining manner of the terminal security key in the second secure manner.

When the second secure manner is adopted, at least one of the terminal authentication identifier, the terminal number, the context, or the terminal security key may be used to determine a part of parameters different between the current connection resume request and the historical connection resume request. For example, the part of parameters may be the terminal authentication identifier; and at least one of the terminal number, the context, or the terminal security key may be used to determine a part of parameters by using an algorithm.

For example, when the second secure manner is adopted, for the current connection resume request and the historical connection resume request, the determined terminal authentication identifier, the terminal number, the context, and the terminal security key may be the same, and therefore, the current connection resume request and the historical connection resume request adopted by the second secure manner are the same. When the first secure manner is adopted, for the current connection resume request and the historical connection resume request, at least one of the determined terminal authentication identifier, the terminal number, the context, or the terminal security key is different, therefore, at least part of parameters of the current connection resume request and the historical connection resume request adopted in the second secure manner are different.

The terminal authentication identifier may include all or part of the MAC-I.

The terminal number may include a number COUNT of a packet data convergence protocol (PDCP), etc.

The terminal security key may include: KRRCint key, KgNB key, etc.

In an embodiment, when the first secure manner is adopted to send the current connection resume request, a first input parameter used to determine a terminal authentication identifier of the current connection resume request is different from a second input parameter used to determine the terminal authentication identifier of the historical connection resume request.

The part of parameters different between the current connection resume request and the historical connection resume request sent in the first secure manner may be the terminal authentication identifier. The terminal authentication identifier may be used to identify the terminal. The base station may determine, based on the terminal authentication identifier in the connection resume request, the terminal sending the connection resume request, and then perform the connection resume process.

When the current connection resume request is sent in the first secure manner, the historical connection resume request may be sent in the first secure manner, or may be sent in a second secure manner.

Illustratively, the terminal authentication identifier may include all or part of the MAC-I.

The terminal authentication identifier may be determined by an input parameter by using a predetermined terminal authentication identifier algorithm. The current connection resume request and the historical connection resume request may respectively adopt a first input parameter and a second input parameter, where the first input parameter is different from the second input parameter. Therefore, the obtained terminal authentication identifier of the current connection resume request and the obtained terminal authentication identifier of the historical connection resume request are different.

The first input parameter and the second input parameter may include, but are not limited to:
a context;
content of a corresponding previous connection resume request, for example, all of or part of the MAC-I of the previous connection resume request, for example, content of the MAC-I excluding resumeMAC-I. For the current connection resume request, the previous connection resume request may be the historical connection resume request; and for the historical connection resume request, the previous connection resume request may be a connection resume request before the historical connection resume request.

Illustratively, the terminal authentication identifier of the current connection resume request and the historical connection resume request may be MAC-I, and a first input parameter and a second input parameter may include at least one of: a physical cell identifier of a primary cell (PCell) of the UE before the RRC connection is suspended; a UE identifier C-RNTI of a PCell of the UE before the RRC connection is suspended; a cell identifier of a target cell of the connection resume; a KRRCint key in the inactive state context stored by the UE, and an integrity protection algorithm configured for the previous time; a data convergence protocol layer number (Packet Data Convergence Protocol Count, PDCP COUNT); a bearer identifier, and a data sending direction (for example, uplink or downlink), etc. At least one parameter is different in the first input parameter and the second input parameter.

For the second secure manner, the first input parameter and the second input parameter may be the same, and the obtained terminal authentication identifiers are the same.

In an embodiment, the method further includes:
receiving first indication information, where the first indication information indicates at least one of the first output parameter or the second input parameter.

The first indication information may be sent by an anchor base station or may be sent by a non-anchor base station. The anchor base station may forward the first indication information through a serving base station of the terminal in the connection resume process. The anchor base station may be the serving base station in the current connection resume process.

The first indication information may be carried in dedicated signaling sent by the base station to the terminal. For example, the first indication information may be carried in RRC reject signaling and sent to the terminal.

For example, the anchor base station in the connection resume process provides the first indication information.

The anchor base station in the connection resume process may send the first indication information to the serving base station of the current connection resume process. The serving base station in the current connection resume process sends the first indication information to the terminal.

Alternatively, the serving base station in the current connection resume process determines and sends the first indication information to the terminal, and sends the first indication information to the anchor base station in the current connection resume process.

In an embodiment, the method further includes:
performing secure authentication on the first indication information;
in response to that the secure authentication fails, ignoring the first indication information; and
in response to that the secure authentication succeeds, adopting at least one of the first output parameter or the second input parameter indicated by the first indication information.

The terminal may perform secure authentication on the first indication information sent by the base station, and use the first input parameter and/or the second input parameter only after the secure authentication succeeds.

Illustratively, a RRCReject message carries the first indication information, for example, network secure authentication information is carried when the network sends the RRCReject message (such as rejectMAC-I). When the secure authentication performed by the terminal on the secure authentication information succeeds, the terminal adopts the first indication information. When the secure authentication fails, the terminal does not adopt the first indication information. For example, the terminal can enter the idle state, or discard the RRCReject message.

By performing secure authentication on the first indication information, security of transmission of the first indication information can be improved, thereby improving security of the current connection resume request and improving communication security.

In an embodiment, when the first secure manner is adopted to send the current connection resume request, a terminal number corresponding to the current connection resume request is different from a terminal number corresponding to the historical connection resume request.

The terminal number may be a record number of a session between the terminal and the base station. The terminal number may be maintained by both the base station and the terminal at the same time. The terminal number may be used to identify different connection resume requests. The terminal number may also be used to determine a part of parameters of the current connection resume request. For example, the terminal number may be used to determine a terminal authentication identifier, for example, all or part of the MAC-I.

In an embodiment, the terminal number includes: a number COUNT of a packet data convergence protocol (PDCP).

A data protocol data unit (PDU) in the PDCP may be used to transmit MAC-I, and the number of the PDCP may be used for integrity protection and ciphering operations therein. Therefore, the current connection resume request adopts a different PDCP number from the historical connection resume request, and different data packets can be obtained.

In an embodiment, the terminal number corresponding to the current connection resume request equals to a sum of the terminal number corresponding to the historical connection resume request and N, where N is a positive integer.

For example, for the first secure manner, in the connection resume process, the terminal may maintain a COUNT value of the PDCP. When the terminal triggers the connection resume process 1, a historical connection resume request is sent through a signaling radio bearer (SRB), and the COUNT value of the SRB is increased by 1. Subsequently, when the terminal triggers the connection resume process 2, a current connection resume request is sent through the SRB, and at this time, the COUNT value of the SRB continues to add N on the basis of the previous connection resume process 1, for example, N is 1.

For the second secure manner, the COUNT value of the PDCP may be maintained in a manner similar to the related arts. Illustratively, when the terminal triggers the connection resume process 1, a historical connection resume request is sent through a signaling radio bearer (SRB), and the COUNT value of the SRB is increased by 1. Subsequently, when the terminal triggers the connection resume process 2, the terminal restores the COUNT value of the SRB for sending the connection resume request in the connection resume process 1 to an initial value (for example, "0"), and sends the current connection resume request.

In such way, the current connection resume request sent by adopting the first secure manner is different from the current connection resume request sent by adopting the second secure manner (i.e., in related arts), the third-party user equipment cannot derive the current connection resume request, thereby improving security of communication between the base station and the terminal.

In an embodiment, in response to receiving feedback information for the historical connection resume request, the terminal number corresponding to the current connection resume request equals to the sum of the terminal number corresponding to the historical connection resume request and N; and
in response to not receiving the feedback information for the historical connection resume request, the terminal number corresponding to the current connection resume request is a preset initial value.

For example, when the terminal receives feedback information (for example, an RRCReject message, an RRCRelease message, or the like) from the network side, the terminal maintains a COUNT value of the PDCP. When the terminal triggers the connection resume process 1, a historical connection resume request is sent through a signaling radio bearer (SRB), and the COUNT value of the SRB is increased by 1. When the terminal receives the RRCReject message sent by the network side, and when the terminal triggers the connection resume process 2, a current connection resume request is sent through the SRB, and at this time, the COUNT value of the SRB continues to add N on the basis of the previous connection resume process 1. When the terminal does not receive the RRCReject message sent by the network, after the connection resume process 1 ends and the terminal triggers the connection resume process 2, the terminal restores the COUNT value of the SRB for sending the connection resume request in the connection resume process 1 to a predetermined initial value.

In an embodiment, when the first secure manner is adopted to send the current connection resume request, a context corresponding to the current connection resume request is determined based on a context corresponding to the historical connection resume request, where the context corresponding to the historical connection resume request is different from the context corresponding to the current connection resume request.

The context corresponding to the historical connection resume request may be used to calculate the terminal authentication identifier in the historical connection resume request. The context corresponding to the current connection resume request may be used to calculate the terminal authentication identifier in the current connection resume request. The terminal authentication identifier may include MAC-I. In the first secure manner, different terminal authentication identifiers are calculated through different contexts, so that the current connection resume request is different from the historical connection resume request, so as to reduce a success rate that the third-party communication device uses the historical connection resume request to request to communicate with the base station, thereby improving communication security between the base station and the terminal.

The context corresponding to the current connection resume request may be determined based on the context corresponding to the historical connection resume request with reference to a current cell identifier, different selection values of specified parameters in the context, etc.

Related arts may be adopted in the second secure manner. A same context is used to calculate the context of the current connection resume request and the context of the historical connection resume request.

In an embodiment, a terminal security key in the context corresponding to the current connection resume request is determined based on at least one of a terminal security key in the context corresponding to the historical connection resume request, a next hop (NH), or a next hop chaining count (NCC).

The terminal security key may include a KgNB key or the like.

For example, when sending the historical connection resume request, the terminal may calculate a terminal authentication identifier of the historical connection resume request based on a stored context (context 1), for example, a context stored when the RRC connection is released. Then, the terminal derives, according to the context 1, a context (context 2) corresponding to the current connection resume request.

For example, the KgNB key in the context 2 may be derived based on the KgNB key in the context 1 with reference to an identifier of a current serving cell or serving base station, or the KgNB key in the context 2 may be derived from an indication of the NH and/or the NCC.

In an embodiment, when the first secure manner is adopted to send the current connection resume request, a terminal security key is determined by the terminal.

The terminal security key may include a terminal access layer key, such as a KgNB key. The terminal security key may be used to encrypt signaling between the base station and the terminal, for example, RRC signaling such as a current connection resume request. The terminal security key may also be used to determine a parameter of the current connection resume request, for example, a terminal authentication identifier.

The terminal determines the terminal security key, and the terminal may specify the terminal security key used by the current connection resume request, thereby reducing the condition that the current connection resume request is the same as the historical connection resume request, thereby improving communication security.

For example, when the terminal has the terminal security key 0 corresponding to the NCC = 0 and the terminal security key 1 corresponding to the NCC = 1, the terminal indicates the key used by the terminal to the network side.

When the current connection resume request is sent in the second secure manner, the terminal security key may be determined based on the related technology.

For example, the terminal initiates a connection resume process, and the key used when calculating the terminal authentication identifier is a terminal security key stored in the context by the terminal. After that, the terminal may derive a new terminal security key based on the key, where the new terminal security key is used for subsequent steps of the current connection resume process: for example, receiving feedback information on the network side, including: an RRCReject message, an RRCRelease message, an RRCResume message, or the like. Since the third-party communication device cannot obtain the terminal security key, the third-party device cannot parse the feedback information, thereby preventing counterfeiting of the third-party device and improving communication security.

In an embodiment, the method further includes:
sending second indication information indicating the terminal security key.

The terminal may indicate the terminal security key used by the terminal to the base station. The base station may send the feedback information (such as RRCReject message, RRCRelease message, or RRCResume message) of the network side based on the terminal security key indicated by the terminal.

Illustratively, the terminal may indicate different terminal security keys by indicating an NCC manner. For example, a terminal security key 0 is indicated through NCC : 0, or a terminal security key 1 is indicated through NCC : 1.

The second indication information may be carried in the connection resume request, or the Msg1 or MsgA of a random access procedure and sent to the base station.

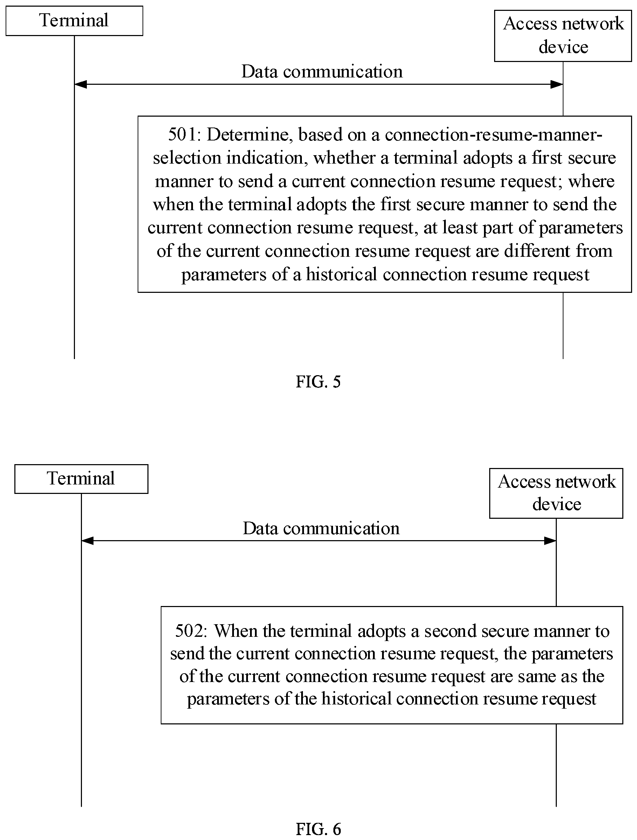

As shown in FIG. 5, an exemplary embodiment provides a connection resume method, and the connection resume method may be performed by a base station, including:
step 501, determining, based on a connection-resume-manner-selection indication, whether a terminal adopts a first secure manner to send a current connection resume request;
where when the terminal adopts the first secure manner to send the current connection resume request, at least part of parameters of the current connection resume request are different from parameters of a historical connection resume request.

The terminal may be a communication device such as a mobile phone that performs wireless communication by using a cellular mobile communication network technology. The base station may be an anchor base station of connection resume of the terminal, or may be a non-anchor base station of the connection resume.

In related arts, when switching from an inactive state to a connected state, the terminal will send a connection resume request (connection resume request 1) to the base station to request to return to the connected state. When the base station sends a connection rejection message (that is, an RRCReject) to reject the request of the terminal, the terminal may send a connection resume request (connection resume request 2) to request to return to the connection state again, where the connection resume request 1 is completely same as the connection resume request 2. The inactive state may be an RRC inactive state, and the connected state may be an RRC connected state.

The historical connection resume request may include a previous connection resume request sent by the terminal, and the current connection resume request may include but is not limited to a subsequent connection resume request sent by the terminal again after the base station rejects the historical connection resume request. For example, the current connection resume request may also be a subsequent connection resume request sent after the base station receives the historical connection resume request and the terminal enters the inactive state again and needs to perform connection resume.

When the current connection resume request is sent in the first secure manner, the historical connection resume request may be sent in the first secure manner, or may be sent in a second secure manner.

The connection-resume-manner-selection indication is used to indicate whether the UE adopts the first secure manner to send the current connection resume request. When the first secure manner is adopted to send the current connection resume request, at least part of parameters of the current connection resume request are different from parameters of a historical connection resume request. The historical connection resume request may be sent in the first secure manner, or may be sent in a manner different from the first secure manner.

The connection-resume-manner-selection indication may be preconfigured, or may be sent by the network side. The connection-resume-manner-selection indication may indicate whether to adopt the first secure manner based on actual requirement of the terminal. For example, the connection-resume-manner-selection indication may be configured based on a risk that the terminal is counterfeited.

Different part of parameters between the current connection resume request and the historical connection resume request may be used by the base station to identify different connection resume requests. The part of parameters may be determined by both communication parties of the base station and the terminal, and the third-party communication device cannot directly obtain or derive the part of parameters. Therefore, the third-party communication device cannot determine the current connection resume request through the historical connection resume request, and hence cannot counterfeit the terminal to communicate with the base station. Communication security between the terminal and the base station is thereby improved.

For example, the part of parameters may be determined by the base station and the UE by using a same algorithm. The algorithm may be an encryption algorithm agreed upon by the base station and the UE, or the algorithm adopts that the base station and the UE adopt an algorithm parameter that is not known by the third-party communication device.

For another example, at least one of the parameters carried in the current resume connection request cannot be determined based on one or more parameters carried in the previous historical resume connection request. In this way, it can be ensured that leaked parameters of the historical resume connection request being intercepted cannot be used for a connection establishment process of the current (i.e., ) resume connection request, thereby improving the security of the connection.

In this way, whether to adopt the first secure manner to send the current connection resume request is determined through the connection-resume-manner-selection indication. On one hand, it can be selected whether to adopt the first secure manner to send the current connection resume request, so as to improve flexibility of selecting a manner of sending a connection resume request. On the other hand, when the first secure manner is adopted to send the current connection resume request, since at least part of parameters of the current connection resume request are different from parameters of a historical connection resume request, cases can be reduced that a third-party communication device communicates with the base station by replicating the historical connection resume request, thereby improving communication security.

In an embodiment, the method includes one of:
sending third indication information indicating the connection-resume-manner-selection indication; or
determining the connection-resume-manner-selection indication based on a communication protocol.

The connection-resume-manner-selection indication may be determined by the network side. For example, the connection-resume-manner-selection indication may be determined by the base station, and the base station may indicate the connection-resume-manner-selection indication by sending third indication information to the terminal.

The connection-resume-manner-selection indication may also be specified by a communication protocol.

In an embodiment, sending third indication information indicating the connection-resume-manner-selection indication includes one of:
sending a radio resource control (RRC) message carrying the third indication information;
sending a broadcast message carrying the third indication information.

The base station may carry the third indication information by using a dedicated configuration message (for example, an RRC message such as an RRCRelease message) and/or broadcast information, to indicate whether the terminal adopts the first secure manner to send the connection resume request in the connection resume process.

For example, when the third indication information indicates the terminal to adopt the first secure manner to send the connection resume request in the connection resume process, the terminal uses the connection resume request sent by adopting the first secure manner to calculate a terminal authentication identifier (for example, resumeMAC-I), otherwise, the terminal calculates the terminal authentication identifier in the second secure manner.

In an embodiment, when the terminal adopts the first secure manner to send the current connection resume request, at least a terminal authentication identifier of the current connection resume request is different from a terminal authentication identifier of the historical connection resume request.

The at least part of parameters may include the terminal authentication identifier, etc. The terminal authentication identifier may be used to identify the terminal. The base station may determine, based on the terminal authentication identifier in the connection resume request, the terminal sending the connection resume request, and then perform the connection resume process.

The terminal authentication identifier may be agreed by the terminal and the base station or may be specified by a protocol, and different terminal authentication identifiers may be adopted in the current connection resume request and the historical connection resume request.

The base station authenticates, by using the terminal authentication identifier in the current connection resume request, whether the current connection resume request is sent by the terminal . When the third-party communication device communicates with the base station by using the replicated historical connection resume request, and the terminal authentication identifier in the historical connection resume request is different from the terminal authentication identifier expected by the base station, the third-party communication device cannot counterfeit the terminal to communicate with the base station.

In this way, when the first secure manner is selected to send the current connection resume request, since the terminal authentication identifier of the current connection resume request is different from the terminal authentication identifier of the historical connection resume request, the third-party communication device cannot pass authentication when communicating with the base station by replicating the historical connection resume request. A condition that the third-party communication device communicates with the base station by replicating the historical connection resume request is reduced, and the communication security is improved.

In an embodiment, the terminal authentication identifier includes: all or part of a message authentication code for integrity (MAC-1).

The MAC-I may be used to authenticate integrity of a signaling message. Different MAC-Is may be used for the current connection resume request and the historical connection resume request. The MAC-I may be determined based on at least one of following parameters: a physical cell identifier of a primary cell (PCell) of the UE before the RRC connection is suspended; a UE identifier C-RNTI of a PCell of the UE before the RRC connection is suspended; a cell identifier of a target cell of the connection resume; a KRRCint key in the inactive state context stored by the UE, and an integrity protection algorithm configured for the previous time; a data convergence protocol layer number (Packet Data Convergence Protocol Count, PDCP COUNT); a bearer identifier, and a data sending direction (for example, uplink or downlink).

The current connection resume request may change one or more parameters, or change an algorithm to obtain a MAC-I different from the historical connection resume request.

A part of the MAC-I may be pre-determined by a communication protocol, or be agreed upon by the base station and the terminal. For example, a part of the MAC-I may be "resumeMAC-I", that is, 16 LSBs of the MAC-I, that is, last 16 bits sorted by encoded bits of the MAC-I.

In this way, when the first secure manner is selected to send the current connection resume request, since all of or part of the MAC-I of the current connection resume request is different from the historical connection resume request, the third-party communication device cannot pass authentication when communicating with the base station by replicating the historical connection resume request. A condition that the third-party communication device communicates with the base station by replicating the historical connection resume request is reduced, and the communication security is improved.

As shown in FIG. 6, an embodiment of the present disclosure provides an information transmission method, further including:
step 502, when the terminal adopts a second secure manner to send the current connection resume request, the parameters of the current connection resume request are same as the parameters of the historical connection resume request.

Step 502 may be implemented separately or in combination with step 501.

When the first secure manner is not selected to send the current connection resume request, a second secure manner different from the first secure manner may be selected to send the current connection resume request.

The parameter of the current connection resume request sent in the second secure manner is same as the historical connection resume request. When one of the base station side and the terminal side cannot use the second secure manner, the first secure manner can be used. Therefore, compatibility of connection resume is improved.

In this way, the first secure manner or the second secure manner is determined, through the connection-resume-manner-selection indication, to be adopted to send the current connection resume request. The flexibility of selecting a manner for sending the connection resume request is improved. Different communication requirements are met.

In an embodiment, a determining manner of a terminal authentication identifier in the first secure manner is different from a determining manner of the terminal authentication identifier in the second secure manner;
and/or,
a determining manner of a terminal number in the first secure manner is different from a determining manner of the terminal number in the second secure manner;
   and/or,
a determining manner of a context in the first secure manner is different from a determining manner of the context in the second secure manner;
   and/or,
a determining manner of a security key in the first secure manner is different from a determining manner of the security key in the second secure manner.

When the second secure manner is adopted, at least one of the terminal authentication identifier, the terminal number, the context, or the terminal security key may be used to determine a part of parameters different between the current connection resume request and the historical connection resume request. For example, the part of parameters may be the terminal authentication identifier; and at least one of the terminal number, the context, or the terminal security key may be used to determine a part of parameters by using an algorithm.

For example, when the second secure manner is adopted, for the current connection resume request and the historical connection resume request, the determined terminal authentication identifier, the terminal number, the context, and the terminal security key may be the same, and therefore, the current connection resume request and the historical connection resume request adopted by the second secure manner are the same. When the first secure manner is adopted, for the current connection resume request and the historical connection resume request, at least one of the determined terminal authentication identifier, the terminal number, the context, or the terminal security key is different, therefore, at least part of parameters of the current connection resume request and the historical connection resume request adopted in the second secure manner are different.

The terminal authentication identifier may include all or part of the MAC-I.

The terminal number may include a number COUNT of a packet data convergence protocol (PDCP), etc.

The terminal security key may include: KRRCint key, KgNB key, etc.

In an embodiment, when the terminal adopts the first secure manner to send the current connection resume request, a first input parameter used to determine a terminal authentication identifier of the current connection resume request is different from a second input parameter used to determine the terminal authentication identifier of the historical connection resume request.

The part of parameters different between the current connection resume request and the historical connection resume request sent in the first secure manner may be the terminal authentication identifier. The terminal authentication identifier may be used to identify the terminal. The base station may determine, based on the terminal authentication identifier in the connection resume request, the terminal sending the connection resume request, and then perform the connection resume process.

When the current connection resume request is sent in the first secure manner, the historical connection resume request may be sent in the first secure manner, or may be sent in a second secure manner.

Illustratively, the terminal authentication identifier may include all or part of the MAC-I.

The terminal authentication identifier may be determined by an input parameter by using a predetermined terminal authentication identifier algorithm. The current connection resume request and the historical connection resume request may respectively adopt a first input parameter and a second input parameter, where the first input parameter is different from the second input parameter. Therefore, the obtained terminal authentication identifier of the current connection resume request and the obtained terminal authentication identifier of the historical connection resume request are different.

The first input parameter and the second input parameter may include, but are not limited to:
a context;
content of a corresponding previous connection resume request, for example, all of or part of the MAC-I of the previous connection resume request, for example, content of the MAC-I excluding resumeMAC-I. For the current connection resume request, the previous connection resume request may be the historical connection resume request; and for the historical connection resume request, the previous connection resume request may be a connection resume request before the historical connection resume request.

Illustratively, the terminal authentication identifier of the current connection resume request and the historical connection resume request may be MAC-I, and a first input parameter and a second input parameter may include at least one of: a physical cell identifier of a primary cell (PCell) of the UE before the RRC connection is suspended; a UE identifier C-RNTI of a PCell of the UE before the RRC connection is suspended; a cell identifier of a target cell of the connection resume; a KRRCint key in the inactive state context stored by the UE, and an integrity protection algorithm configured for the previous time; a data convergence protocol layer number (Packet Data Convergence Protocol Count, PDCP COUNT); a bearer identifier, and a data sending direction (for example, uplink or downlink), etc. At least one parameter is different in the first input parameter and the second input parameter.

For the second secure manner, the first input parameter and the second input parameter may be the same, and the obtained terminal authentication identifiers are the same.

In an embodiment, the method further includes:
sending first indication information, where the first indication information indicates at least one of the first output parameter or the second input parameter.

The first indication information may be sent by an anchor base station or may be sent by a non-anchor base station. The anchor base station may forward the first indication information through a serving base station of the terminal in the connection resume process. The anchor base station may be the serving base station in the current connection resume process.

The first indication information may be carried in dedicated signaling sent by the base station to the terminal. For example, the first indication information may be carried in RRC reject signaling and sent to the terminal.

For example, the anchor base station in the connection resume process provides the first indication information.

The anchor base station in the connection resume process may send the first indication information to the serving base station of the current connection resume process. The serving base station in the current connection resume process sends the first indication information to the terminal.

Alternatively, the serving base station in the current connection resume process determines and sends the first indication information to the terminal, and sends the first indication information to the anchor base station in the current connection resume process.

In an embodiment, the method further includes:
performing, by the terminal, secure authentication on the first indication information;
in response to that the secure authentication fails, ignoring the first indication information; and
in response to that the secure authentication succeeds, adopting at least one of the first output parameter or the second input parameter indicated by the first indication information.

The terminal may perform secure authentication on the first indication information sent by the base station, and use the first input parameter and/or the second input parameter only after the secure authentication succeeds.

Illustratively, a RRCReject message carries the first indication information, for example, network secure authentication information is carried when the network sends the RRCReject message (such as rejectMAC-I). When the secure authentication performed by the terminal on the secure authentication information succeeds, the terminal adopts the first indication information. When the secure authentication fails, the terminal does not adopt the first indication information. For example, the terminal can enter the idle state, or discard the RRCReject message.

By performing secure authentication on the first indication information, security of transmission of the first indication information can be improved, thereby improving security of the current connection resume request and improving communication security.

In an embodiment, when the terminal adopts the first secure manner to send the current connection resume request, a terminal number corresponding to the current connection resume request is different from a terminal number corresponding to the historical connection resume request.

The terminal number may be a record number of a session between the terminal and the base station. The terminal number may be maintained by both the base station and the terminal at the same time. The terminal number may be used to identify different connection resume requests. The terminal number may also be used to determine a part of parameters of the current connection resume request. For example, the terminal number may be used to determine a terminal authentication identifier, for example, all or part of the MAC-I.

In an embodiment, the terminal number includes: a number COUNT of a packet data convergence protocol (PDCP).

A data protocol data unit (PDU) in the PDCP may be used to transmit MAC-I, and the number of the PDCP may be used for integrity protection and ciphering operations therein. Therefore, the current connection resume request adopts a different PDCP number from the historical connection resume request, and a different data packet can be obtained.

In an embodiment, the terminal number corresponding to the current connection resume request equals to a sum of the terminal number corresponding to the historical connection resume request and N, where N is a positive integer.

For example, for the first secure manner, in the connection resume process, the terminal may maintain a COUNT value of the PDCP. When the terminal triggers the connection resume process 1, a historical connection resume request is sent through a signaling radio bearer (SRB), and the COUNT value of the SRB is increased by 1. Subsequently, when the terminal triggers the connection resume process 2, a current connection resume request is sent through the SRB, and at this time, the COUNT value of the SRB continues to add N on the basis of the previous connection resume process 1, for example, N is 1.

For the second secure manner, the COUNT value of the PDCP may be maintained in a manner similar to the related arts. Illustratively, when the terminal triggers the connection resume process 1, a historical connection resume request is sent through a signaling radio bearer (SRB), and the COUNT value of the SRB is increased by 1. Subsequently, when the terminal triggers the connection resume process 2, the terminal restores the COUNT value of the SRB for sending the connection resume request in the connection resume process 1 to an initial value (for example, "0"), and sends the current connection resume request.

In such way, the current connection resume request sent by adopting the first secure manner is different from the current connection resume request sent by adopting the second secure manner (i.e., in related arts), the third-party user equipment cannot derive the current connection resume request, thereby improving security of communication between the base station and the terminal.

In an embodiment, in response to receiving feedback information for the historical connection resume request, the terminal number corresponding to the current connection resume request equals to the sum of the terminal number corresponding to the historical connection resume request and N; and
in response to not receiving the feedback information for the historical connection resume request, the terminal number corresponding to the current connection resume request is a preset initial value.

For example, when the terminal receives feedback information (for example, an RRCReject message, an RRCRelease message, or the like) from the network side, the terminal maintains a COUNT value of the PDCP. When the terminal triggers the connection resume process 1, a historical connection resume request is sent through a signaling radio bearer (SRB), and the COUNT value of the SRB is increased by 1. When the terminal receives the RRCReject message sent by the network side, and when the terminal triggers the connection resume process 2, a current connection resume request is sent through the SRB, and at this time, the COUNT value of the SRB continues to add N on the basis of the previous connection resume process 1. When the terminal does not receive the RRCReject message sent by the network, after the connection resume process 1 ends and the terminal triggers the connection resume process 2, the terminal restores the COUNT value of the SRB for sending the connection resume request in the connection resume process 1 to a predetermined initial value.

In an embodiment, when the terminal adopts the first secure manner to send the current connection resume request, a context corresponding to the current connection resume request is determined based on a context corresponding to the historical connection resume request, and the context corresponding to the historical connection resume request is different from the context corresponding to the current connection resume request.

The context corresponding to the historical connection resume request may be used to calculate the terminal authentication identifier in the historical connection resume request. The context corresponding to the current connection resume request may be used to calculate the terminal authentication identifier in the current connection resume request. The terminal authentication identifier may include MAC-I. In the first secure manner, different terminal authentication identifiers are calculated through different contexts, so that the current connection resume request is different from the historical connection resume request, so as to reduce a success rate that the third-party communication device uses the historical connection resume request to request to communicate with the base station, thereby improving communication security between the base station and the terminal.

The context corresponding to the current connection resume request may be determined based on the context corresponding to the historical connection resume request with reference to a current cell identifier, different selection values of specified parameters in the context, etc.

Related arts may be adopted in the second secure manner, where a same context is used to calculate the context of the current connection resume request and the context of the historical connection resume request.

In an embodiment, a terminal security key in the context corresponding to the current connection resume request is determined based on at least one of a terminal security key in the context corresponding to the historical connection resume request, a next hop (NH), or a next hop chaining count (NCC).

The terminal security key may include a KgNB key or the like.

For example, when sending the historical connection resume request, the terminal may calculate a terminal authentication identifier of the historical connection resume request based on a stored context (context 1), for example, a context stored when the RRC connection is released. Then, the terminal derives, according to the context 1, a context (context 2) corresponding to the current connection resume request.

For example, the KgNB key in the context 2 may be derived based on the KgNB key in the context 1 with reference to an identifier of a current serving cell or serving base station, or the KgNB key in the context 2 may be derived from an indication of the NH and/or the NCC.

In an embodiment, when the first secure manner is adopted to send the current connection resume request, a terminal security key is determined by the terminal.

The terminal security key may include a terminal access layer key, such as a KgNB key. The terminal security key may be used to encrypt signaling between the base station and the terminal, for example, RRC signaling such as a current connection resume request. The terminal security key may also be used to determine a parameter of the current connection resume request, for example, a terminal authentication identifier.

The terminal determines the terminal security key, and the terminal may specify the terminal security key used by the current connection resume request, thereby reducing the condition that the current connection resume request is the same as the historical connection resume request, thereby improving communication security.

For example, when the terminal has the terminal security key 0 corresponding to the NCC = 0 and the terminal security key 1 corresponding to the NCC = 1, the terminal indicates the key used by the terminal to the network side.

When the current connection resume request is sent in the second secure manner, the terminal security key may be determined based on the related technology.

For example, the terminal initiates a connection resume process, and the key used when calculating the terminal authentication identifier is a terminal security key stored in the context by the terminal. After that, the terminal may derive a new terminal security key based on the key, where the new terminal security key is used for subsequent steps of the current connection resume process: for example, receiving feedback information on the network side, including: an RRCReject message, an RRCRelease message, an RRCResume message, or the like. Since the third-party communication device cannot obtain the terminal security key, the third-party device cannot parse the feedback information, thereby preventing counterfeiting of the third-party device and improving communication security.

In an embodiment, the method further includes:
receiving second indication information indicating the terminal security key.

The terminal may indicate the terminal security key used by the terminal to the base station. The base station may be based on the terminal security key indicated by the terminal. The base station may send the feedback information (such as RRCReject message, RRCRelease message, or RRCResume message) of the network side based on the terminal security key indicated by the terminal.

Illustratively, the terminal may indicate different terminal security keys by indicating an NCC manner. For example, a terminal security key 0 is indicated through NCC : 0, or a terminal security key 1 is indicated through NCC : 1.

The second indication information may be carried in the connection resume request, or the Msg1 or MsgA of a random access procedure and sent to the base station.

In an embodiment, the method includes: in response to that the base station is an anchor base station of the terminal, sending indication information indicating whether the terminal adopts the first secure manner to send the current connection resume request to a non-anchor base station of the terminal.

According to the received connection resume request information of the terminal, the network side performs the connection resume process according to the first secure manner. For example, the base station sends the feedback information according to the first secure manner. For example, the connection resume message, the connection reject message, or the connection release message.

The base station may include an anchor base station of the connection resume process or a non-anchor base station of the connection resume process (such as a current serving base station of the connection resume process). The anchor base station of the connection resume process and the non-anchor base station of the connection resume process can agree on a specific implementation of the connection resume process in advance, and the specific implementation includes at least one of:

Specific implementation 1: the non-anchor base station of the connection resume process uses the first secure manner to authenticate the terminal. The non-anchor base station of the connection resume process uses the first secure manner to authenticate the terminal according to at least one of following information provided by the anchor base station of the connection resume process:
indication information indicating whether the terminal is configured to adopt the first secure manner;
indication information indicating whether the terminal supports the first secure manner; or
a context corresponding to the current connection resume request of the terminal.

Specific implementation 2: the anchor base station of the connection resume process uses the first secure manner to authenticate the terminal. The anchor base station of the connection resume process uses a "specific secure manner" to authenticate the terminal according to at least one of following information provided by the non-anchor base station of the connection resume process:
1. Terminal authentication identifier information. The "terminal authentication identifier information" includes at least one of:
   a connection resume request, such as RRCResumeRequest;
   a terminal authentication identifier, such as resumeMAC-I; or
   a terminal identifier, such as an inactive state-radio network temporary identifier (I-RNTI).
2. Auxiliary parameters for authenticating the "terminal authentication information":
   an identifier of a target cell of the connection resume process, such as a cell global identifier (CGI);
   a physical identifier of a target cell of the connection resume process, such as a physical cell identifier (PCI);
   a frequency point of a target cell of the connection resume process, such as an absolute radio frequency channel number (ARFCN);
   a bandwidth part identifier of a target cell of the connection resume process, such as BWP-1;
   a "specific secure manner" used by the terminal, such as a "terminal authentication identifier calculating algorithm 2";
   a key used by the terminal, such as NCC=1;
   a bearer identifier, such as SRB1;
   a packet data convergence protocol (PDCP) number, such as COUNT;
   a data transmitting direction, such as uplink RRC signaling.

A specific example is provided in the following with reference to any one of the above embodiments.

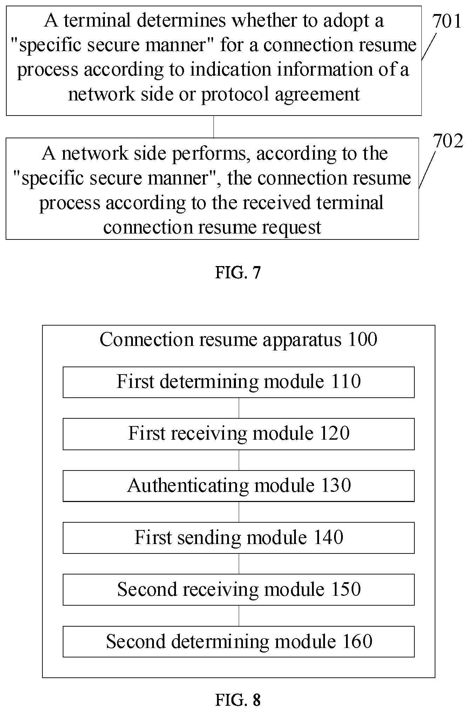

As shown in FIG. 7, specific steps of a connection resume process of a terminal include:
step 701: the terminal determines whether to adopt a "specific secure manner" for the connection resume process according to indication information of a network side or protocol agreement.

The "specific secure manner" may be a "new secure manner" (i.e., a first secure manner). Either of the terminal and the network side may support the "new secure manner" and a "old secure manner" (i.e., a second secure manner), where a connection resume request 1 and a connection resume request 2 used in the first secure manner are different, and a connection resume request 1 and a connection resume request 2 used in the second secure manner are same. The connection resume request 2 may be a connection resume request sent after the connection resume request 1 is rejected by the network.

The network indicates, through an RRCRelease message (or broadcast information), the terminal to adopt the "new secure manner" to send the connection resume request in the connection resume process. Then the terminal calculates a terminal authentication identifier (such as resumeMAC-I) by using the "new secure manner" in the connection resume process, otherwise, the terminal calculates the terminal authentication identifier by using the "old secure manner".

The indication information of the network side includes at least one of:
a dedicated configuration message; or
a broadcast message.

For example, after the terminal receives, from both of the RRCRelease message and a broadcast message of a cell to which the connection resume process is initiated, the indication information indicating to adopt the "specific secure manner", the terminal adopts the "specific secure manner" to perform the connection resume process to the cell to which the connection resume process is initiated. The "specific secure manner" includes at least one of:
1. Specific calculating manner of a terminal authentication identifier. The "specific calculating manner of the terminal authentication identifier" includes at least one of:
   calculating manner 1 of the terminal authentication identifier: the "calculating manner of the terminal authentication identifier" of the connection resume process described in the background;
   calculating manner 2 of the terminal authentication identifier: changing at least one of input parameters for calculating the "terminal authentication identifier" (for example, input parameters of MAC-I calculation described in the background). (For example, a value of at least one input parameter for calculating the "terminal authentication identifier" sent in a previous RRCResumeRequest message is different from a value of a corresponding parameter for calculating the "terminal authentication identifier" sent in a current RRCResumeRequest message.)

For the "calculating manner 2 of the terminal authentication identifier", according to "the input parameter(s) for calculating "the terminal authentication identifier"" indicated by the network, the terminal calculates the "terminal authentication identifier" by using the "the input parameter(s) for calculating "the terminal authentication identifier" indicated by the network when initiating the connection resume process. (For example, the network indicates "the input parameter(s) for calculating "the terminal authentication identifier" in the RRCReject message.)

"The input parameter(s) for calculating "the terminal authentication identifier"" indicated by the network includes at least one of:
"context", for example, the "context" determined in a specific terminal context maintaining manner a);
content of the previous connection resume request (for example, part of the content of the connection resume request (such as content of the connection resume request excluding the resumeMAC-I), or all of the content of the connection resume request).

Further, the terminal uses the "input parameter(s) for calculating "the terminal authentication identifier"" indicated by the network only after successfully performing security authentication on the network indication information. (For example, the network authentication information rejectMAC-I is carried when the network sends the RRCReject message, and after the terminal successfully performs security authentication on the network authentication information, the terminal uses the "input parameter(s) for calculating "the terminal authentication identifier"" indicated by the network.) When the security authentication fails, the terminal does not use the "input parameter(s) for calculating "the terminal authentication identifier"" indicated by the network. The terminal can enter an IDLE state, or discard the RRCReject message.

A manner that the network indicates the "input parameter(s) for calculating "the terminal authentication identifier"" includes any one of:
A manner 1 for the network to indicate calculating of the "the terminal authentication identifier": "an anchor base station of the connection resume process" provides the input parameter(s) for calculating the "terminal authentication identifier".

Further, "the anchor base station of the connection resume process" sends the input parameter(s) for calculating the "terminal authentication identifier" to "a current serving base station of the connection resume process". Then, "the current serving base station of the connection resume process" sends the "input parameter(s) for calculating the "terminal authentication identifier"" to the terminal.

A manner 2 for the network to indicate calculating of the "the terminal authentication identifier": "a current serving base station of the connection resume process" provides the input parameter(s) for calculating the "terminal authentication identifier".

Further, the "current serving base station of the connection resume process" sends the input parameter(s) for calculating the "terminal authentication identifier" to the "anchor base station of the connection resume process".

2. Specific maintaining manner of the terminal number (for example, a maintaining manner of a COUNT value of the PDCP (where the COUNT value is an input parameter in an encryption and authentication process))

terminal number maintaining manner 1: in the connection resume process, the terminal resets the COUNT value of the PDCP. (For example, when the terminal triggers the connection resume process 1, the connection resume request is sent through the SRB, and at this time, the COUNT value of the SRB is increased by 1. Subsequently, when the terminal triggers the connection resume process 2, the terminal restores the COUNT value of the SRB for sending the connection resume request in the connection resume process 1 to an initial value (for example, "0"), and sends the connection resume request.)

terminal number maintaining manner 2: in the connection resume process, the terminal maintains the COUNT value of the PDCP. (For example, when the terminal triggers the connection resume process 1, the connection resume request is sent through the SRB, and at this time, the COUNT value of the SRB is increased by 1. Subsequently, when the terminal triggers the connection resume process 2, a connection resume request is sent through the SRB, and at this time, the COUNT value of the SRB continues to add 1 on the basis of the previous connection resume process 1.)

terminal number maintaining manner 3: in the connection resume process, when the terminal receives feedback information from the network side (such as an RRCReject message, an RRCRelease message), the terminal maintains the COUNT value of the PDCP. (For example, when the terminal triggers the connection resume process 1, the connection resume request is sent through the SRB, and at this time, the COUNT value of the SRB is increased by 1. When the terminal receives the RRCReject message sent by the network, and when the terminal triggers the connection resume process 2, a connection resume request is sent through the SRB, and at this time, the COUNT value of the SRB continues to add 1 on the basis of the previous connection resume process 1. When the terminal does not receive the RRCReject message sent by the network, after the connection resume process 1 ends and the terminal triggers the connection resume process 2, subsequently, the terminal restores the COUNT value of the SRB for sending the connection resume request in the connection resume process 1 to an initial value.)

3. Specific maintaining manner of a terminal context. The "maintaining manner of the terminal context" is that, when indication information sent by the network side is received (such as RRCReject message, or the RRCRelease message), "a first context" is discarded and a "second context" is reserved.

Manner 1 for maintaining the terminal context: in the current connection resume process, the "first context" is "a historical context", and "the second context" is "a new context derived according to the historical context". (For example, when sending the connection resume request, the terminal calculates the "terminal authentication identifier" based on a pre-stored historical "context-1" (such as a context stored when the RRC connection is released. Then, the terminal derives a new "context-2" according to the historical "context-1" (for example, the terminal derives a new KgNB key according to a current (stored) KgNB key, or, derives a new KgNB key according to indication of "NH (Next Hop)" and "NCC".)

Manner 2 for maintaining the terminal context: in the current connection resume process, the "first context" is "a new context derived according to a historical context", and the "second context" is a "historical context".

4. Specific manner for using a terminal security key.

Manner 1 for using a terminal security key: the terminal indicates a key used by the terminal (for example, the terminal has a key corresponding to NCC=0 and a key corresponding to NCC=1, and the terminal indicates the key used by the terminal to the network side (for example, a value of the NCC is indicated through the connection resume request (or through Msg1 or MsgA in a random access procedure))).

Manner 2 for using a terminal security key: the terminal uses "an old security key" when calculating the "terminal authentication identifier", and after calculating the "terminal authentication identifier", the terminal uses "a new security key derived according to the old security key". (For example, the terminal initiates the connection resume process, and a key used for calculating the "terminal authentication identifier" is a key in a context currently stored by the terminal. After that, the terminal may "derive a new security key based on the old security key, where the new security key is used for subsequent steps of the current connection resume process (for example, for receiving feedback information from the network side (such as an RRCReject message, an RRCRelease message, or an RRCResume message, etc.).)

The "context" includes at least one of: a key (for example, an encryption key, or an integrity verification key); a security algorithm (for example, an encryption algorithm, or an integrity verification algorithm), a COUNT value of the PDCP; a physical cell identifier of a PCell of the UE before the RRC connection is suspended; a UE identifier of a PCell of the UE before the RRC connection is suspended; a carrier identifier; a data transmitting direction.

Step 702, performing, by the network side according to the "specific secure manner", the connection resume process according to the received terminal connection resume request. (For example, the network side sends feedback information (e.g., "connection resume message" or "connection reject message" or "connection release message") according to "specific secure manner".)

Further, performing, by the network side, connection resume process according to the specific secure manner includes: the current serving base station of the connection resume process and the anchor base station of the connection resume process negotiate the specific secure manner adopted in the connection resume process. The negotiation manner includes at least one of:
negotiation manner 1: the current serving base station of the connection resume process uses the specific secure manner to authenticate the terminal. The current serving base station of the connection resume process uses the specific secure manner to authenticate the terminal according to at least one of following information provided by the anchor base station of the connection resume process:
indication information indicating whether the terminal is configured to use the specific secure manner;
indication information indicating whether the terminal supports using of the specific secure manner; or
context of the terminal (the context is described in step 1).
negotiation manner 2: the anchor base station of the connection resume process uses the specific secure manner to authenticate the terminal. The anchor base station of the connection resume process uses the specific secure manner to authenticate the terminal according to at least one of following information provided by the current serving base station of the connection resume process:
   1. terminal authentication identifier information, where the terminal authentication identifier information includes at least one of:
      a connection resume request, such as RRCResumeRequest;
      a terminal authentication identifier, such as resumeMAC-I; or
      a terminal identifier, such as an inactive state-radio network temporary identifier (I-RNTI).
   2. an auxiliary parameter for authenticating the terminal authentication information:
      an identifier of a target cell of the connection resume process, such as a cell global identifier (CGI);
      a physical identifier of a target cell of the connection resume process, such as a physical cell identifier (PCI);
      a frequency point of a target cell of the connection resume process, such as an absolute radio frequency channel number (ARFCN);
      a bandwidth part identifier of a target cell of the connection resume process, such as BWP-1;
      a "specific secure manner" used by the terminal, such as a "terminal authentication identifier calculating algorithm 2";
      a key used by the terminal, such as NCC=1;
      a bearer identifier, such as SRB1;
      a packet data convergence protocol (PDCP) number, such as COUNT;
      a data transmitting direction, such as uplink RRC signaling.

An embodiment of the present disclosure further provides a connection resume apparatus, applied to a terminal in a cellular mobile wireless communication, as shown in FIG. 8, where the apparatus 100 includes:
a first determining module 110, configured to determine, based on a connection-resume-manner-selection indication, whether to adopt a first secure manner to send a current connection resume request;
where when the first secure manner is adopted to send the current connection resume request, at least part of parameters of the current connection resume request are different from parameters of a historical connection resume request.

In an embodiment, when a second secure manner is adopted to send the current connection resume request, the parameters of the current connection resume request are same as the parameters of the historical connection resume request.

In an embodiment, a determining manner of a terminal authentication identifier in the first secure manner is different from a determining manner of the terminal authentication identifier in the second secure manner;
and/or,
a determining manner of a terminal number in the first secure manner is different from a determining manner of the terminal number in the second secure manner;
   and/or,
a determining manner of a context in the first secure manner is different from a determining manner of the context in the second secure manner;
   and/or,
a determining manner of a security key in the first secure manner is different from a determining manner of the security key in the second secure manner.

In an embodiment, when the first secure manner is adopted to send the current connection resume request, a first input parameter used to determine a terminal authentication identifier of the current connection resume request is different from a second input parameter used to determine the terminal authentication identifier of the historical connection resume request.

In an embodiment, the apparatus 100 further includes:
a first receiving module, configured to receive first indication information, where the first indication information indicates at least one of the first output parameter or the second input parameter.

In an embodiment, the apparatus 100 further includes:
an authenticating module 130, configured to perform secure authentication on the first indication information;
in response to that the secure authentication fails, ignore the first indication information; and
in response to that the secure authentication succeeds, adopt at least one of the first output parameter or the second input parameter indicated by the first indication information.

In an embodiment, when the first secure manner is adopted to send the current connection resume request, a terminal number corresponding to the current connection resume request is different from a terminal number corresponding to the historical connection resume request.

In an embodiment, the terminal number corresponding to the current connection resume request equals to a sum of the terminal number corresponding to the historical connection resume request and N, where N is a positive integer.

In an embodiment, in response to receiving feedback information for the historical connection resume request, the terminal number corresponding to the current connection resume request equals to the sum of the terminal number corresponding to the historical connection resume request and N; and

in response to not receiving the feedback information for the historical connection resume request, the terminal number corresponding to the current connection resume request is a preset initial value.

In an embodiment, the terminal number includes: a number COUNT of a packet data convergence protocol (PDCP).

In an embodiment, when the first secure manner is adopted to send the current connection resume request, a context corresponding to the current connection resume request is determined based on a context corresponding to the historical connection resume request, and the context corresponding to the historical connection resume request is different from the context corresponding to the current connection resume request.

In an embodiment, a terminal security key in the context corresponding to the current connection resume request is determined based on at least one of a terminal security key in the context corresponding to the historical connection resume request, a next hop (NH), or a next hop chaining count (NCC).

In an embodiment, when the first secure manner is adopted to send the current connection resume request, a terminal security key is determined by the terminal.

In an embodiment, the apparatus 100 further includes:
a first sending module 140, configured to send second indication information indicating the terminal security key.

In an embodiment, when the first secure manner is adopted to send the current connection resume request, at least a terminal authentication identifier of the current connection resume request is different from a terminal authentication identifier of the historical connection resume request.

In an embodiment, the terminal authentication identifier includes: all or part of a message authentication code for integrity (MAC-I).

In an embodiment, the apparatus 100 includes one of:
a second receiving module 150, configured to receive third indication information indicating the connection-resume-manner-selection indication; or
a second determining module 160, configured to determine the connection-resume-manner-selection indication based on a communication protocol.

In an embodiment, the second receiving module 150 is specifically configured to perform one of:
receiving a radio resource control (RRC) message carrying the third indication information;
receiving a broadcast message carrying the third indication information.

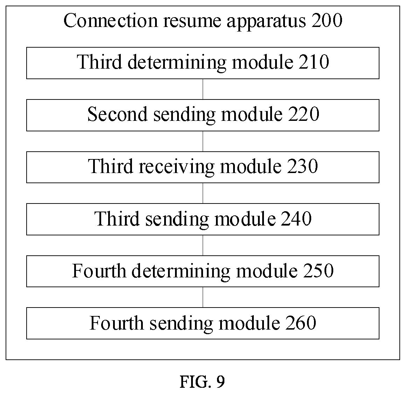

An embodiment of the present disclosure further provides a connection resume apparatus, applied to a base station in a cellular mobile wireless communication, as shown in FIG. 9, where the apparatus 200 includes:
a third determining module 210, configured to determine, based on a connection-resume-manner-selection indication, whether a terminal adopts a first secure manner to send a current connection resume request;
where when the terminal adopts the first secure manner to send the current connection resume request, at least part of parameters of the current connection resume request are different from parameters of a historical connection resume request.

In an embodiment, when the terminal adopts a second secure manner to send the current connection resume request, the parameters of the current connection resume request are same as the parameters of the historical connection resume request.

In an embodiment, a determining manner of a terminal authentication identifier in the first secure manner is different from a determining manner of the terminal authentication identifier in the second secure manner;
and/or,
a determining manner of a terminal number in the first secure manner is different from a determining manner of the terminal number in the second secure manner;
   and/or,
a determining manner of a context in the first secure manner is different from a determining manner of the context in the second secure manner;
   and/or,
a determining manner of a security key in the first secure manner is different from a determining manner of the security key in the second secure manner.

In an embodiment, when the terminal adopts the first secure manner to send the current connection resume request, a first input parameter used to determine a terminal authentication identifier of the current connection resume request is different from a second input parameter used to determine the terminal authentication identifier of the historical connection resume request.

In an embodiment, the apparatus 200 further includes:
a second sending module 220, configured to send first indication information, where the first indication information indicates at least one of the first output parameter or the second input parameter.

In an embodiment, when the terminal adopts the first secure manner to send the current connection resume request, a terminal number corresponding to the current connection resume request is different from a terminal number corresponding to the historical connection resume request.

In an embodiment, the terminal number corresponding to the current connection resume request equals to a sum of the terminal number corresponding to the historical connection resume request and N, where N is a positive integer.

In an embodiment, in response to receiving feedback information for the historical connection resume request, the terminal number corresponding to the current connection resume request equals to the sum of the terminal number corresponding to the historical connection resume request and N; and

in response to not receiving the feedback information for the historical connection resume request, the terminal number corresponding to the current connection resume request is a preset initial value.

In an embodiment, the terminal number includes: a number COUNT of a packet data convergence protocol (PDCP).

In an embodiment, when the terminal adopts the first secure manner to send the current connection resume request, a context corresponding to the current connection resume request is determined based on a context corresponding to the historical connection resume request, and the context corresponding to the historical connection resume request is different from the context corresponding to the current connection resume request.

In an embodiment, a terminal security key in the context corresponding to the current connection resume request is determined based on at least one of a terminal security key in the context corresponding to the historical connection resume request, a next hop (NH), or a next hop chaining count (NCC).

In an embodiment, when the terminal adopts the first secure manner to send the current connection resume request, a terminal security key is determined by the terminal.

In an embodiment, the apparatus 200 further includes:
a third receiving module 230, configured to receive second indication information indicating the terminal security key.

In an embodiment, when the terminal adopts the first secure manner to send the current connection resume request, at least a terminal authentication identifier of the current connection resume request is different from a terminal authentication identifier of the historical connection resume request.

In an embodiment, the terminal authentication identifier includes: all or part of a message authentication code for integrity (MAC-I).

In an embodiment, the apparatus 200 includes one of:
a third sending module 240, configured to send third indication information indicating the connection-resume-manner-selection indication; or
a fourth determining module 250, configured to determine the connection-resume-manner-selection indication based on a communication protocol.

In an embodiment, the third sending module 240 is specifically configured to perform one of:
sending a radio resource control (RRC) message carrying the third indication information;
sending a broadcast message carrying the third indication information.

In an embodiment, the apparatus includes:
a fourth sending module 260, configured to: in response to that the base station is an anchor base station of the terminal, send indication information indicating whether the terminal adopts the first secure manner to send the current connection resume request to a non-anchor base station of the terminal.

In an exemplary embodiment, the first determining module 110, the first receiving module 120, the authenticating module 130, the first sending module 140, the second receiving module 150, the second determining module 160, the third determining module 210, the second sending module 220, the third receiving module 230, the third sending module 240, the fourth determining module 250, and the fourth sending module 260 may be implemented by one or more central processing units (CPU), graphics processing units (GPU), baseband processors (BP), application specific integrated circuits (ASIC), digital signal processors (DSP), programmable logic devices (PLD), complex programmable logic devices (CPLD), field-programmable gate arrays (FPGA), general-purpose processors, controllers, microcontroller units (MCU), microprocessors, or other electronic components, which are configured to perform the above method.

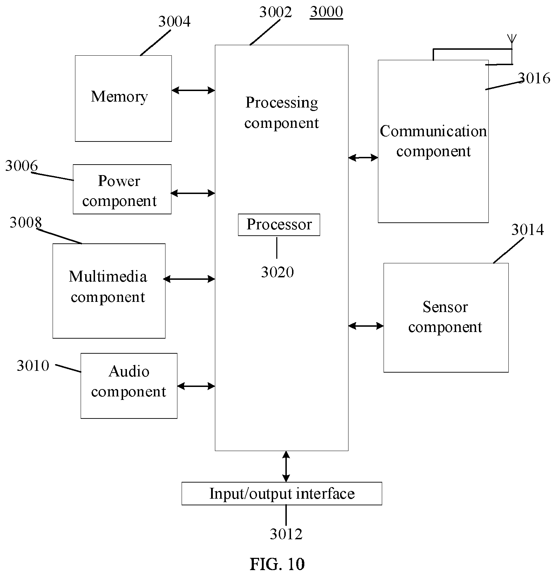

FIG. 10 is a block diagram of an apparatus 3000 for connection resume according to an exemplary embodiment. For example, the apparatus 3000 may be a mobile phone, a computer, a digital broadcast terminal, a messaging device, a game console, a tablet device, a medical device, a fitness device, a personal digital assistant, or the like.

Referring to FIG. 10, the apparatus 3000 may include one or more of following components: a processing component 3002, a memory 3004, a power component 3006, a multimedia component 3008, an audio component 3010, an input/output (I/O) interface 3012, a sensor component 3014, and a communication component 3016.

The processing component 3002 generally controls overall operations of the apparatus 3000, such as operations associated with display, telephone calls, data communications, camera operations, and recording operations. The processing component 3002 may include one or more processors 3020 to execute instructions to perform all or part of steps of the above method. In addition, the processing component 3002 may include one or more modules to facilitate interaction between the processing component 3002 and other components. For example, the processing component 3002 may include a multimedia module to facilitate interaction between the multimedia component 3008 and the processing component 3002.

The memory 3004 is configured to store various types of data to support operation of the apparatus 3000. Examples of such data include instructions of any application or method for operating on the apparatus 3000, contact data, phonebook data, messages, pictures, videos, etc. The memory 3004 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

The power component 3006 provides power to various components of the apparatus 3000. The power component 3006 may include a power management system, one or more power sources, and other components associated with generating, managing, and distributing power for the apparatus 3000.

The multimedia component 3008 includes a screen providing an output interface between the apparatus 3000 and the user. In some embodiments, the screen may include a liquid crystal display (LCD) and a touch panel (TP). When the screen includes the touch panel, the screen may be implemented as a touch screen to receive input signals from a user. The touch panel includes one or more touch sensors to sense touches, swipes, and gestures on the touch panel. The touch sensor may not only sense a boundary of a touch or slide action, but also detect a duration and pressure associated with the touch or slide operation. In some embodiments, the multimedia component 3008 includes a front camera and/or a rear camera. When the apparatus 3000 is in an operation mode, such as a shooting mode or a video mode, the front camera and/or the rear camera may receive external multimedia data. Each front camera and rear camera may be a fixed optical lens system or have a focal length and an optical zoom capability.

The audio component 3010 is configured to output and/or input audio signals. For example, the audio component 3010 includes a microphone (MIC) configured to receive an external audio signal when the apparatus 3000 is in an operation mode, such as a call mode, a recording mode, and a voice recognition mode. The received audio signal may be further stored in the memory 3004 or transmitted via the communication component 3016. In some embodiments, the audio component 3010 further includes a speaker configured to output an audio signal.

The I/O interface 3012 provides an interface between the processing component 3002 and a peripheral interface module, and the peripheral interface module may be a keyboard, a click wheel, a button, or the like. These buttons may include, but are not limited to, home buttons, volume buttons, start buttons, and lock buttons.

The sensor component 3014 includes one or more sensors for providing status assessments of various aspects of the apparatus 3000. For example, the sensor component 3014 may detect an ON/OFF state of the apparatus 3000, relative positioning of components (e.g., the display and keypad of the apparatus 3000), a change in position of the apparatus 3000 or a component of the apparatus 3000, a presence or absence of user contact with the apparatus 3000, an orientation or acceleration/deceleration of the apparatus 3000, and a change in temperature of the apparatus 3000. The sensor component 3014 may include a proximity sensor configured to detect the presence of nearby objects without any physical contact. The sensor component 3014 may also include a light sensor, such as a CMOS (Complementary Metal Oxide Semiconductor) or CCD (Charge Couple Device) image sensor, for use in imaging applications. In some embodiments, the sensor component 3014 may further include an acceleration sensor, a gyroscope sensor, a magnetic sensor, a pressure sensor, or a temperature sensor.

The communication component 3016 is configured to facilitate wired or wireless communication between the apparatus 3000 and other devices. The apparatus 3000 may access a wireless network based on a communication standard, such as Wi-Fi, 2G, or 3G, or a combination thereof. In an exemplary embodiment, the communication component 3016 receives a broadcast signal or broadcast related information from an external broadcast management system via a broadcast channel. In an exemplary embodiment, the communication component 3016 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology, and other technologies.

In an exemplary embodiment, the apparatus 3000 may be implemented by one or more application specific integrated circuits (ASIC), digital signal processors (DSP), digital signal processing devices (DSPD), programmable logic devices (PLD), field programmable gate arrays (FPGA), controllers, micro-controllers, microprocessors, or other electronic components, and is configured to perform the above method.

In an exemplary embodiment, a non-transitory computer-readable storage medium including instructions is further provided, such as the memory 3004 including the instructions, where the instructions are executable by the processor 3020 of the apparatus 3000, to perform the above method. For example, the non-transitory computer-readable storage medium may be a ROM, a random access memory (RAM), a CD-ROM, a magnetic tape, a floppy disk, an optical data storage device, and the like.

Other implementations of embodiments of the present disclosure will be readily apparent to those skilled in the art upon consideration of the specification and practice of the present disclosure disclosed herein. The present disclosure is intended to cover any of the variations, uses or adaptations of the embodiments of the present disclosure, which follow the general principles of embodiments of the present disclosure and include common knowledge or customary technical means in the technical field not disclosed by the embodiments of the present disclosure. The specification and embodiments are to be regarded as exemplary only, and the true scope and spirit of the embodiments of the present disclosure are indicated by the following claims.

It should be understood that the embodiments of the present disclosure are not limited to the precise structures described above and shown in the accompanying drawings, and various modifications and changes may be made without departing from the scope thereof. The scope of embodiments of the present disclosure is limited only by the appended claims.

## Claims

1. A connection resume method, performed by a terminal, comprising:
determining, based on a connection-resume-manner-selection indication, whether to adopt a first secure manner to send a current connection resume request;
wherein when the first secure manner is adopted to send the current connection resume request, at least part of parameters of the current connection resume request are different from parameters of a historical connection resume request.

2. The method according to claim 1, wherein
when a second secure manner is adopted to send the current connection resume request, the parameters of the current connection resume request are same as the parameters of the historical connection resume request.

3. The method according to claim 2, wherein:
a determining manner of a terminal authentication identifier in the first secure manner is different from a determining manner of the terminal authentication identifier in the second secure manner; and/or
a determining manner of a terminal number in the first secure manner is different from a determining manner of the terminal number in the second secure manner; and/or
a determining manner of a context in the first secure manner is different from a determining manner of the context in the second secure manner; and/or
a determining manner of a security key in the first secure manner is different from a determining manner of the security key in the second secure manner.

4. The method according to claim 1, wherein
when the first secure manner is adopted to send the current connection resume request, a first input parameter used to determine a terminal authentication identifier of the current connection resume request is different from a second input parameter used to determine the terminal authentication identifier of the historical connection resume request.

5. The method according to claim 4, further comprising:
receiving first indication information, wherein the first indication information indicates at least one of the first output parameter or the second input parameter.

6. The method according to claim 5, further comprising:
performing secure authentication on the first indication information;
in response to that the secure authentication fails, ignoring the first indication information; and
in response to that the secure authentication succeeds, adopting at least one of the first output parameter or the second input parameter indicated by the first indication information.

7. The method according to claim 1, wherein
when the first secure manner is adopted to send the current connection resume request, a terminal number corresponding to the current connection resume request is different from a terminal number corresponding to the historical connection resume request.

8. The method according to claim 7, wherein
the terminal number corresponding to the current connection resume request equals to a sum of the terminal number corresponding to the historical connection resume request and N, wherein N is a positive integer.

9. The method according to claim 8, wherein
in response to receiving feedback information for the historical connection resume request, the terminal number corresponding to the current connection resume request equals to the sum of the terminal number corresponding to the historical connection resume request and N; and
in response to not receiving the feedback information for the historical connection resume request, the terminal number corresponding to the current connection resume request is a preset initial value.

10. The method according to claim 7, wherein the terminal number comprises: a number COUNT of a packet data convergence protocol, PDCP.

11. The method according to claim 1, wherein
when the first secure manner is adopted to send the current connection resume request, a context corresponding to the current connection resume request is determined based on a context corresponding to the historical connection resume request, and the context corresponding to the historical connection resume request is different from the context corresponding to the current connection resume request.

12. The method according to claim 11, wherein
a terminal security key in the context corresponding to the current connection resume request is determined based on at least one of a terminal security key in the context corresponding to the historical connection resume request, a next hop, NH, or a next hop chaining count, NCC.

13. The method according to claim 1, wherein
when the first secure manner is adopted to send the current connection resume request, a terminal security key is determined by the terminal.

14. The method according to claim 13, further comprising:
sending second indication information indicating the terminal security key.

15. The method according to any one of claims 1-14, wherein when the first secure manner is adopted to send the current connection resume request, at least a terminal authentication identifier of the current connection resume request is different from a terminal authentication identifier of the historical connection resume request.

16. The method according to claim 15, wherein the terminal authentication identifier comprises: all or part of a message authentication code for integrity, MAC-I.

17. The method according to any one of claims 1-14, comprising at least one of:
receiving third indication information indicating the connection-resume-manner-selection indication; or
determining the connection-resume-manner-selection indication based on a communication protocol.

18. The method according to claim 17, wherein receiving third indication information indicating the connection-resume-manner-selection indication comprises one of:
receiving a radio resource control, RRC, message carrying the third indication information; and
receiving a broadcast message carrying the third indication information.

19. A connection resume method, performed by a base station, comprising:
determining, based on a connection-resume-manner-selection indication, whether a terminal adopts a first secure manner to send a current connection resume request;
wherein when the terminal adopts the first secure manner to send the current connection resume request, at least part of parameters of the current connection resume request are different from parameters of a historical connection resume request.

20. The method according to claim 19, wherein
when the terminal adopts a second secure manner to send the current connection resume request, the parameters of the current connection resume request are same as the parameters of the historical connection resume request.

21. The method according to claim 20, wherein:
a determining manner of a terminal authentication identifier in the first secure manner is different from a determining manner of the terminal authentication identifier in the second secure manner; and/or
a determining manner of a terminal number in the first secure manner is different from a determining manner of the terminal number in the second secure manner; and/or
a determining manner of a context in the first secure manner is different from a determining manner of the context in the second secure manner; and/or
a determining manner of a security key in the first secure manner is different from a determining manner of the security key in the second secure manner.

22. The method according to claim 19, wherein
when the terminal adopts the first secure manner to send the current connection resume request, a first input parameter used to determine a terminal authentication identifier of the current connection resume request is different from a second input parameter used to determine the terminal authentication identifier of the historical connection resume request.

23. The method according to claim 22, further comprising:
sending first indication information, wherein the first indication information indicates at least one of the first output parameter or the second input parameter.

24. The method according to claim 19, wherein
when the terminal adopts the first secure manner to send the current connection resume request, a terminal number corresponding to the current connection resume request is different from a terminal number corresponding to the historical connection resume request.

25. The method according to claim 24, wherein
the terminal number corresponding to the current connection resume request equals to a sum of the terminal number corresponding to the historical connection resume request and N, wherein N is a positive integer.

26. The method according to claim 25, wherein
in response to receiving feedback information for the historical connection resume request, the terminal number corresponding to the current connection resume request equals to the sum of the terminal number corresponding to the historical connection resume request and N; and
in response to not receiving the feedback information for the historical connection resume request, the terminal number corresponding to the current connection resume request is a preset initial value.

27. The method according to claim 24, wherein the terminal number comprises: a number COUNT of a packet data convergence protocol, PDCP.

28. The method according to claim 19, wherein
when the terminal adopts the first secure manner to send the current connection resume request, a context corresponding to the current connection resume request is determined based on a context corresponding to the historical connection resume request, and the context corresponding to the historical connection resume request is different from the context corresponding to the current connection resume request.

29. The method according to claim 28, wherein
a terminal security key in the context corresponding to the current connection resume request is determined based on at least one of a terminal security key in the context corresponding to the historical connection resume request, a next hop, NH, or a next hop chaining count, NCC.

30. The method according to claim 19, wherein when the terminal adopts the first secure manner to send the current connection resume request, a terminal security key is determined by the terminal.

31. The method according to claim 30, further comprising:
receiving second indication information indicating the terminal security key.

32. The method according to any one of claims 19-31, wherein when the terminal adopts the first secure manner to send the current connection resume request, at least a terminal authentication identifier of the current connection resume request is different from a terminal authentication identifier of the historical connection resume request.

33. The method according to claim 32, wherein the terminal authentication identifier comprises: all or part of a message authentication code for integrity, MAC-I.

34. The method according to any one of claims 19-31, comprising at least one of:
sending third indication information indicating the connection-resume-manner-selection indication; or
determining the connection-resume-manner-selection indication based on a communication protocol.

35. The method according to claim 34, wherein sending third indication information indicating the connection-resume-manner-selection indication comprises one of:
sending a radio resource control, RRC, message carrying the third indication information; and
sending a broadcast message carrying the third indication information.

36. The method according to any one of claims 19-31, comprising: in response to that the base station is an anchor base station of the terminal, sending indication information indicating whether the terminal adopts the first secure manner to send the current connection resume request to a non-anchor base station of the terminal.

37. A connection resume apparatus, applied to a terminal, comprising:
a first determining module, configured to determine, based on a connection-resume-manner-selection indication, whether to adopt a first secure manner to send a current connection resume request;
wherein when the first secure manner is adopted to send the current connection resume request, at least part of parameters of the current connection resume request are different from parameters of a historical connection resume request.

38. A connection resume apparatus, applied to a base station, comprising:
a third determining module, configured to determine, based on a connection-resume-manner-selection indication, whether a terminal adopts a first secure manner to send a current connection resume request;
wherein when the terminal adopts the first secure manner to send the current connection resume request, at least part of parameters of the current connection resume request are different from parameters of a historical connection resume request.

39. A communication device apparatus, comprising a processor, a memory, and an executable program stored in the memory and executable by the processor, wherein when the processor executes the executable program, steps of the connection resume method according to any one of claims 1-8 or 19-36 are implemented.

40. A storage medium, storing an executable program, wherein when the processor executes the executable program, steps of the connection resume method according to any one of claims 1-8 or 19-36 are implemented.
